# EUROPEAN PATENT SPECIFICATION

(11) **EP 3 950 779 B1**
(45) Date of publication and mention of the grant of the patent: **03.12.2025**
(21) Application number: 20784100.8
(22) Date of filing: 26.03.2020
(51) Int. Cl.: C08G 65/336, C09D 171/00, C09K 3/00, C09K 3/18, C08L 71/00

(54) **FLUOROPOLYETHER GROUP-CONTAINING COMPOUND**
FLUOROPOLYETHER ENTHALTENDE VERBINDUNG
COMPOSE COMPRENANT UN GROUPE FLUORO POLYETHER

(30) Priority: 29.03.2019 JP 2019066329
(43) Date of publication of application: 09.02.2022
(73) Proprietor: DAIKIN INDUSTRIES, LTD., Osaka-Shi, Osaka 530-0001 (JP)
(72) Inventor: YAMASHITA, Tsuneo, Osaka-shi, Osaka 530-8323 (JP); MITSUHASHI, Hisashi, Osaka-shi, Osaka 530-8323 (JP); MAEHIRA, Takeshi, Osaka-shi, Osaka 530-8323 (JP); MOTONARI, Yoshimi, Osaka-shi, Osaka 530-8323 (JP)
(74) Representative: Hoffmann Eitle
(86) International application number: PCT/JP2020/013740
(87) International publication number: WO 2020/203666

(56) References cited:
- WO-A1-2009/008380
- WO-A1-2009/008380
- WO-A1-2017/038305
- WO-A1-2018/043166
- WO-A1-2018/043166
- WO-A1-2018/143433
- JP-A- 2000 327 772
- KR-A- 20150 054 147
- KR-A- 20150 054 147

## Description

### Technical Field

The present disclosure relates to a surface-treating agent comprising a fluoropolyether group-containing compound.

### Background Art

Certain types of fluorine-containing silane compounds are known to be capable of providing excellent water-repellency, oil-repellency, antifouling property, and the like when used in surface treatment of a substrate. A layer obtained from a surface-treating agent containing a fluorine-containing silane compound (hereinafter, also referred to as a "surface-treating layer") is applied as a so-called functional thin film to a large variety of substrates such as glass, plastics, fibers, and building materials.

A known such fluorine-containing compound is a fluoropolyether group-containing silane compound having a fluoropolyether group in the molecular backbone and a hydrolyzable group bonding to a Si atom at the molecular terminal or in the terminal part (JP-A-2000-327772).

EP-A-3 508 513 (WO 2018/043166) discloses a method for producing a fluorinated ether compound, comprises reacting a compound of the formula R^{f}(CF₂)ₐ-CF₂OC(=O)R^{f4} (3) or R^{f}(CF₂)ₐ-C(=O)X¹ (4) with a compound of the formula HN(-R¹CH=CH₂)₂ (5) to obtain a compound of the formula R^{f}(CF₂)ₐ-C(=O)N(-R¹CH=CH₂)₂ (2), wherein R^{f} is linear poly (fluoroalkoxy) having ≥ 2 carbon atoms and at least one ether oxygen atom between carbon atoms, R^{f4} is C₁₋₃₀-perfluoroalkyl or C₂₋₃₀-perfluoroalkyl having an ether oxygen atom between carbon atoms, X¹ is halogen, R¹ is alkylene, and a is an integer of 1-5.

WO 2009/008380 A1 relates to a surface treatment agent for forming a coating film having e.g. water/oil repellency, comprising a fluorine-containing ether compound (A) of the formula RF¹-O(CF₂CF₂O)ₐ-CF₂-(Q)_{b}(-(CH₂)_{d}-SiLₚR₃₋ₚ)_{c} (wherein RF¹ is saturated C₁₋₂₀-perfluorohydrocarbyl, a is an integer of 1-200, b is 0 or 1, Q does not exist or is a 2-3 valent coupling group, c is 1 or 2, d is an integer of 2-6, L is a hydrolyzable group, R is H or monovalent hydrocarbyl, and p is an integer of 1-3) and a partially hydrolyzable compound (B), or a partial hydrolysis condensate thereof.

KR-A-20215-0054147 describes an antifouling coating agent containing a fluorine-based compound of the formula Rf-C(=O)-N(R¹X¹)(R²X²), wherein Rf is a poly (perfluoroalkoxy) moiety, R¹ and R² are aliphatic C₁₋₄-hydrocarbon groups,, and X¹ and X² are silane groups -SiR₍₃₋ₓ₎(OR)ₓ wherein R each independently is an aliphatic hydrocarbon group and x is an integer of 1-3.

### Summary of Invention

### Technical Problem

In Examples of JP-A_2000-327772, compounds containing a fluoroether group with a repeating unit represented by (CF(CF₃)CF₂O) are used. However, it has been found that cured layers obtained by using such compounds may not provide good friction durability.

### Solution to Problem

The present invention provides a surface-treating agent (also referred to as "the present surface-treating agent" hereinafter) comprising
(i) a fluoropolyether group-containing compound of formula (1):

   Rf¹-R^{F}-O_{q}-C(=O)-NR^{Si}₂ (1)

   wherein:
   - Rf¹: is methyl substituted with F;
   - R^{F}: is -(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-; wherein a, b, c, and d each independently are an integer of 0-30, e and f each independently are an integer of 1-200, with (a+b+c+d+e+f) ≥ 5 and e/f ≥ 0.9, and the order of the repeating units enclosed in parentheses provided with a subscript a, b, c, d, e, or f is not limited; and
   R^{Fa} each independently is H, F or Cl;
   - q: is 0 or 1;
   - R^{Si}: each independently is -X¹-SiR^{a1}ₚ₁R^{b1}_{q1}R^{c1}ᵣ₁ (S1) wherein, each independently at each occurrence,
   X¹ is a single bond, -O- or a divalent organic group;
   R^{a1} is -Z^{1'}-SiR^{a1'}_{p1'}R^{b1'}_{q1'}R^{c1'}_{r1'} wherein, each independently at each occurrence,
   Z^{1'} is a single bond, -O- or a divalent organic group;
   R^{a1'} is -Z^{1"}-SiR^{a1"}_{p1"}R^{b1"}_{q1"}R^{c1"}_{r1"} wherein, each independently at each occurrence,
   Z^{1"} is a single bond, -O- or a divalent organic group;
   R^{a1"} is -Z^{1‴}-SiR^{b1‴}_{q1‴}R^{c1‴}_{r1‴} wherein, each independently at each occurrence,
   Z^{1‴} is a single bond, -O- or a divalent organic group;
   R^{b1‴} is OH or a hydrolyzable group;
   R^{c1‴} is H or a monovalent organic group;
   q1‴ is an integer of 0-3;
   r1‴ is an integer of 0-3;
   R^{b1"} is OH or a hydrolyzable group;
   R^{c1"} is H or a monovalent organic group;
   p1" is an integer of 0-3;
   q1" is an integer of 0-3;
   r1" is an integer of 0-3;
   R^{b1'} is OH or a hydrolyzable group;
   R^{c1'} is H or a monovalent organic group;
   p1' is an integer of 0-3;
   q1' is an integer of 0-3;
   r1' is an integer of 0-3;
   R^{b1} is OH or a hydrolyzable group;
   R^{c1} is H or a monovalent organic group;
   p1 is an integer of 0-3;
   q1 is an integer of 0-3;
   r1 is an integer of 0-3;
   and at least one R^{b1}, R^{b1'}, R^{b1"} or R^{b1‴} is present in each group R^{Si},
(ii) a compound of formula (2):

   R^{Si}₂N-C(=O)-Rf²ₚ-R^{F}O_{q}-C(=O)-NR^{Si}₂ (2)

   wherein Rf² is C₁₋₆-alkylene optionally substituted with F; p is 0 or 1; and R^{F}, q and R^{Si} are as defined above, and
(iii) a fluorine-containing oil,
   wherein the content of the compound of formula (2) is 0.001-70 mol%, and the content of the fluorine-containing oil is 0.001-50 mol%, each based on the total of the compounds of formulae (1) and (2) and the fluorine-containing oil.

Also, the present invention provides (i) the use of the present surface-treating agent as an antifouling coating agent or a water-proof coating agent, and/or for vacuum deposition, (ii) a pellet comprising the present surface-treating agent, and (iii) an article comprising a substrate and, on a surface of the substrate, a layer formed of the present surface-treating agent.

Preferred embodiments of the invention are as defined in the appended dependent claims and/or in the following detailed description.

### Advantageous Effect of Invention

According to the present invention, it is possible to provide a surface-treating agent comprising a fluoroalkyl group-containing compound suited for forming a cured layer having good friction durability.

### Description of Embodiments

As used herein, the term "monovalent organic group" refers to a monovalent group containing carbon. The monovalent organic group is not limited, and may be a hydrocarbon group or a derivative thereof. The derivative of hydrocarbon group refers to a group that has one or more of N, O, S, Si, amide, sulfonyl, siloxane, carbonyl, carbonyloxy, and the like at the terminal or in the molecular chain of the hydrocarbon group.

As used herein, the "divalent organic group" is not limited, and examples thereof include a divalent group obtained by further removing one hydrogen atom from a hydrocarbon group.

As used herein, the term "hydrocarbon group" refers to a group that contains carbon and hydrogen and that is obtained by removing one hydrogen atom from a molecule. The hydrocarbon group is not limited, and examples thereof include a hydrocarbon group, such as an aliphatic hydrocarbon group and an aromatic C₁₋₂₀-hydrocarbon group optionally substituted with one or more substituents. The above "aliphatic hydrocarbon group" may be either straight, branched, or cyclic, and may be either saturated or unsaturated. The hydrocarbon group may contain one or more ring structures. The hydrocarbon group may have one or more of e.g. N, O, S, Si, amide, sulfonyl, siloxane, carbonyl and carbonyloxy at the terminal or in the molecular chain thereof.

As used herein, the substituent of the "hydrocarbon group" is not limited, and examples thereof include one or more groups selected from halogen; and C₁₋₆-alkyl, C₂₋₆-alkenyl, C₂₋₆-alkynyl, C₃₋₁₀-cycloalkyl, unsaturated C₃₋₁₀-cycloalkyl, 5- to 10-membered heterocyclyl, 5- to 10-membered unsaturated heterocyclyl, C₆₋₁₀-aryl, and 5- to 10-membered heteroaryl, each of which is optionally substituted with one or more halogen atoms.

The alkyl group and the phenyl group may be herein unsubstituted or substituted, unless particularly noted. Each substituent of such groups is not limited, and examples thereof include one or more groups selected from halogen, C₁₋₆-alkyl, C₂₋₆-alkenyl, and C₂₋₆-alkynyl.

As used herein, the term "hydrolyzable group" refers to a group that is able to undergo a hydrolysis reaction, that is, refers to a group that can be removed from the main backbone of a compound by a hydrolysis reaction. Examples of the hydrolyzable group include -OR^{h}, -OCOR^{h}, -O-N=CR^{h}₂, - NR^{h}₂, -NHR^{h}, and halogen (in these formulas, R^{h} is substituted or unsubstituted C₁₋₄-alkyl).

The fluoropolyether group-containing compound is a compound of formula (1)and a compound of formula (2) (also referred to as "compound (1)" and "compound (2)", respectively, hereinafter):

Rf¹-R^{F}-O_{q}-C(=O)-NR^{Si}₂ (1)

R^{Si}₂N-C(=O)-Rf²ₚ-R^{F}-O_{q}-C(=O)-NR^{Si}₂ (2)

In the above formula, Rf¹ is methyl substituted with F.

In the above formula, Rf² is C₁₋₆-alkylene optionally substituted with F. Therein, the "C₁₋₆ alkylene" may be straight or branched, and it is preferably straight or branched C₁₋₃-alkylene, and more preferably straight C₁₋₃-alkylene.

The above Rf² is preferably C₁₋₆ alkylene substituted with F, more preferably C₁₋₆-perfluoroalkylene, and even more preferably C₁₋₃-perfluoroalkylene.

The above C₁₋₆-perfluoroalkylene may be straight or branched, and it is preferably straight or branched C₁₋₃-perfluoroalkylene, more preferably straight C₁₋₃-perfluoroalkyl, and specifically -CF₂-, -CF₂CF₂-, or - CF₂CF₂CF₂-.

In the above formula, p is 0 or 1. In one embodiment, p is 0. In another embodiment, p is 1.

In the above formulae, q is each independently at each occurrence 0 or 1. In one embodiment, q is 0. In another embodiment, q is 1.

In formulae (1) and (2), R^{F} is each independently a fluoropolyether group of the following formula. The structure described as R^{F} is bonded to Rf¹ on the left side in formula (1), and is bonded to Rf²ₚ on the left side in formula (2).

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

In the formula:
R^{Fa} is each independently H, F or Cl; and
a, b, c, and d each independently are an integer of 0-30, e and f each independently are an integer of 1-200, with (a+b+c+d+e+f) ≥ 5 and e/f ≥ 0.9, and the order of the repeating units enclosed in parentheses provided with a subscript a, b, c, d, e, or f is not limited
R^{Fa} preferably each independently is H or F, and more preferably F.

These repeating units may be straight or branched, and are preferably straight. For example, -(OC₆F₁₂)- may be - (OCF₂CF₂CF₂CF₂CF₂CF₂)-, -(OCF(CF₃)CF₂CF₂CF₂CF₂)-, - (OCF₂CF(CF₃)CF₂CF₂CF₂)-, - (OCF₂CF₂CF(CF₃)CF₂CF₂)-, - (OCF₂CF₂CF₂CF(CF₃)CF₂)-, -(OCF₂CF₂CF₂CF₂CF(CF₃))-, or the like, and it is preferably -(OCF₂CF₂CF₂CF₂CF₂CF₂)-. -(OC₅F₁₀)- may be -(OCF₂CF₂CF₂CF₂CF₂)-, - (OCF(CF₃)CF₂CF₂CF₂)-, - (OCF₂CF(CF₃)CF₂CF₂)-, -(OCF₂CF₂CF(CF₃)CF₂)-, - (OCF₂CF₂CF₂CF(CF₃))-, or the like, and it is preferably - (OCF₂CF₂CF₂CF₂CF₂)-. -(OC₄F₈)- may be any of -(OCF₂CF₂CF₂CF₂)-, -(OCF (CF₃)CF₂CF₂)-, -(OCF₂CF(CF₃)CF₂)-, - (OCF₂CF₂CF(CF₃))-, - (OC(CF₃)₂CF₂)-, -(OCF₂C(CF₃)₂)-, -(OCF(CF₃)CF(CF₃))-, - (OCF(C₂F₅)CF₂)-, and -(OCF₂CF(C₂F₅))-, and it is preferably - (OCF₂CF₂CF₂CF₂)-. -(OC₃F₆)- (that is to say, in the above formula, R^{Fa} is F) may be any of -(OCF₂CF₂CF₂)-, - (OCF (CF₃)CF₂)-, and -(OCF₂CF(CF₃))-, and it is preferably - (OCF₂CF₂CF₂)-. Also, - (OC₂F₄)- may be any of -(OCF₂CF₂)- and -(OCF(CF₃))-, and it is preferably -(OCF₂CF₂)-.

The above a and b may be 0.

In one embodiment, the above a-d preferably each independently are an integer of ≤ 20, more preferably an integer of ≤ 10, and particularly preferably an integer of ≤ 5, and it may be 0.

In one embodiment, [a+b+c+d] is preferably ≤ 30, more preferably ≤ 20, even more preferably ≤ 10, and particularly preferably ≤ 5.

In one embodiment, the ratio of [e+f] to [a+b+c+d+e+f} in R^{F} is preferably ≥ 0.80, more preferably ≥ 0.90, even more preferably ≥ 0.98, and particularly preferably ≥ 0.99.

In a preferred embodiment, R^{F} is -(OC₄F₈)_{c}-(OC₃F₆)_{d}-(OC₂F₄)ₑ-(OCF₂)_{f}-(in the formula, c and d are each independently an integer of 0-30; e and f are each independently an integer of 1-200, preferably 5-200, and more preferably 10-200; and the order of the repeating units in parentheses provided with a subscript c, d, e, or f is not limited). Preferably, R^{F} is - (OCF₂CF₂CF₂CF₂)_{c}-(OCF₂CF₂CF₂)_{d}-(OCF₂CF₂)ₑ-(OCF₂)_{f}-. In one embodiment, R^{F} may be -(OC₂F₄)ₑ-(OCF₂)_{f}- (in the formula, e and f are each independently an integer of 1-200, preferably 5-200, and more preferably 10-200, and the order of the repeating units in parentheses provided with a subscript e or f is not limited).

More preferably, R^{F} is -(OC₂F₄)ₑ-(OCF₂)_{f}- (in the formula, e and f are each independently an integer of 1-200, preferably 5-200, and more preferably 10-200, and the order of the repeating units in parentheses provided with a subscript e or f is not limited).

In one embodiment, e may be an integer of 9-90 and f may be an integer of 10-100, or e may be an integer of 9-45 and f may be an integer of 10-50.

In one embodiment, [e+f] is preferably ≥ 20, more preferably ≥ 30, and particularly preferably ≥ 40.

In one embodiment, [e+f] is preferably ≤ 200, more preferably ≤ 180, even more preferably ≤ 160, and particularly preferably ≤ 150.

In the above R^{F}, the e/f ratio is ≥ 0.9 and preferably ≥ 1.0, such as ≥ 1.1, and it may be ≥ 1.3. The e/f ratio is preferably ≤ 10.0, ≤ 9.0, more preferably ≤ 5.0, even more preferably ≤ 2.0, and particularly preferably ≤ 1.5. The e/f ratio may be, for example, 0.9-10.0, specifically 0.9-5.0, more specifically 0.9-2.0, and even more specifically 0.9-1.5.

When the e/f ratio becomes too low, the perfluoroalkyl group-containing compound (or a composition containing such a compound, for example, a surface-treating agent) may behave like a dilatant fluid before curing, that is, behave similarly to a solid in response to shear stress, and as a result, the lubricity of the cured layer to be formed may be reduced. In addition, the hydrolyzability of the cured layer to be formed using the fluoropolyether group-containing compound may be increased, and the durability of the cured layer may be decreased. When the e/f ratio becomes too high, the dynamic friction coefficient of the cured layer to be formed using the fluoropolyether group-containing compound becomes high, and a cured layer with sufficient friction durability may not be obtained. Furthermore, when the e/f ratio is in the above range, the proportion of oxygen atoms in the PFPE chain becomes smaller than when the e/f ratio is < 0.9, that is, the proportion of fluorine atoms becomes larger. As a result, it is thought that the water- and oil-repellency of the cured layer to be formed becomes higher.

In the present invention, the use of a compound having R^{F} as described above provides good chemical durability (chemical resistance), friction durability, water-repellency, oil-repellency, antifouling property (for example, preventing fouling such as fingerprints from adhering), waterproof property (preventing water from penetrating into electronic components), surface lubricity (or lubricity, such as removability by wiping for fouling including fingerprints and excellent tactile sensations to the fingers), of the cured layer to be formed using the compound (for example, surface-treating layer). This is thought to be because the use of a compound having R^{F} as described above reduces the dynamic friction coefficient of the surface of the cured layer to be formed from the compound.

The cured layer (or cured film) to be formed using the compound of the present disclosure may be less likely to be decomposed at a high temperature. The term "less likely to be decomposed at a high temperature" means that, for example, the 1% decomposition temperature of the cured layer is at a relatively high temperature. That is, the compound of the present disclosure can contribute to formation of a cured layer that can be used in a wide temperature range. As used herein, the term "1% decomposition temperature" refers to a temperature at which 1 mass% of the cured layer is decomposed based on the entire cured layer. The 1% decomposition temperature refers to a value measured by thermogravimetric/differential thermal analysis (TG/DTA), and specifically, it is measured in the range of 25-600°C under an air atmosphere with a temperature-increasing rate of 10°C/min. For example, DTG-60 from Shimadzu Corporation can be used for the above TG/DTA.

The number average molecular weight of the R^{F1} and R^{F2} moieties is not limited, and it is, for example, 500-30,000, preferably 1,500-30,000, and more preferably 2,000-10,000. Herein, the number average molecular weight of R^{F1} and R^{F2} is defined as a value obtained by ¹⁹F-NMR measurement.

In another embodiment, the number average molecular weight of the R^{F1} and R^{F2} moieties is 500-30,000, preferably 1,000-20,000, more preferably 2,000-15,000, and even more preferably 2,000-10,000, and it may be, for example, 3,000-8,000. In another embodiment, the number average molecular weight of the R^{F1} and R^{F2} moieties may be 2,000-8,000.

In another embodiment, the number average molecular weight of the R^{F1} and R^{F2} moieties is 3,000-30,000, preferably 3,500-15,000, and more preferably 3,500-8,000, and it may be, for example, 4,000-8,000 or 5,000-8,000.

In another embodiment, the number average molecular weight of the R^{F1} and R^{F2} moieties may be 5,000-30,000, preferably 8,000-15,000, and more preferably 10,000-15,000.

In one embodiment, the present fluoropolyether group-containing compound may have an average molecular weight of the R^{F1} and R^{F2} moieties in the range of 2,000-8,000 and an e/f ratio in the range of 0.9-2.0, or may have an average molecular weight of the R^{F1} and R^{F2} moieties in the range of 3,500-8,000 and an e/f ratio in the range of 0.9-1.5. In another embodiment, the number average molecular weight of the R^{F1} and R^{F2} moieties is in the range of 10,000-15,000 and the e/f ratio is in the range of 0.9-2.0. The fluoropolyether group-containing compound can contribute to formation of a cured layer that has an extremely low dynamic friction coefficient and exhibits good lubrication characteristics.

In the present disclosure, in the compounds (1) and (2), the group R^{F1} or R^{F2} and the group R^{Si} are bonded by C(=O)-N. Here, the group R^{F1} or R^{F2} is a group containing a fluoropolyether group that mainly provides water-repellency and surface lubricity, and the group R^{Si} is a silane moiety that provides bonding ability to a substrate. As described above, the inclusion of the structure represented by C(=O)-N can provide good chemical resistance (for example, resistance to strong alkaline aqueous solutions and strong acid aqueous solutions, and resistance to oxidation by active oxygen species) of the cured layer to be formed using the compounds (1) and (2).

Furthermore, the present compounds (1) and (2) have an e/f ratio in a particular range in the group R^{F} included in R^{F1} or R^{F2}. By having such a structure, the cured layer to be formed using the compounds (1) and (2) can exhibit extremely high chemical resistance, friction durability, water-repellency, oil-repellency, antifouling property (for example, preventing fouling such as fingerprints from adhering), waterproof property (preventing water from penetrating into electronic components), or surface lubricity (or lubricity, such as removability by wiping for fouling including fingerprints and excellent tactile sensations to the fingers).

In the compounds (1) and (2), two groups R^{Si} are bonded to the N atom of C(=O)-N. By having such a structure, the cured layer to be formed using the compound of the present disclosure can have good bonding strength to the substrate, resulting in good chemical resistance (for example, durability against solvents, durability against artificial sweat, resistance to strong alkaline aqueous solutions and strong acid aqueous solutions, and resistance to oxidation by active oxygen species), friction durability, weather resistance, and durability under UV exposure.

R^{Si} each independently is a group of formula (S1).

-X¹ -SiR^{a1}ₚ₁R^{b1}_{q1}R^{c1}ᵣ₁ (S1)

In formula (S1), X¹ each independently is a single bond, an oxygen atom, or a divalent organic group. In one embodiment, X¹ is a single bond. In one embodiment, X¹ is an oxygen atom. Preferably, X¹ is a divalent organic group.

Examples of the divalent organic group X¹ include a group of the formula:

-(Z²¹)_{z11}-(O)_{z12}-(Z²²)_{z13}-

wherein Z²¹ and Z²² are divalent organic groups;
z11 is 0 or 1; z12 is 0 or 1; and z13 is 0 or 1. At least one of z11 and z13 is 1.

X¹ is preferably C₁₋₆-alkylene, - (CH₂)_{z4}-O-(CH₂)_{z6}- (in the formula, z5 is an integer of 0-6 such as an integer of 1-6, z6 is an integer of 0-6 such as an integer of 1-6, and [z5+z6] is ≥ 1), or - (CH₂)_{z7}-phenylene- (CH₂)_{z8}- (in the formula, z7 is an integer of 0-6 such as an integer of 1-6, z8 is an integer of 0-6 such as an integer of 1-6, and preferably [z7+z8] is ≥ 1). The C₁₋₆ alkylene group may be straight or may be branched, but it is preferably straight. These groups may be substituted with one or more substituents selected from, for example, F, C₁₋₆-alkyl, C₂₋₆-alkenyl, and C₂₋₆-alkynyl, but it is preferably unsubstituted.

In a preferred embodiment, X¹ is C₁₋₆-alkylene or - (CH₂)_{z7}-phenylene- (CH₂)_{z8}-, and preferably -phenylene- (CH₂)_{z8}-. When X¹ is the group, the light resistance, in particular ultraviolet resistance, of the cured layer to be formed can be further enhanced. Preferably, z7 is an integer of 0-6 and z8 is an integer of 1-6.

In another preferred embodiment, the above X¹ is C₁₋₆-alkylene, and more preferably C₁₋₃-alkylene. When X¹ has the structure, the light resistance, in particular ultraviolet resistance, of the cured layer to be formed can be further enhanced.

In one embodiment, X¹ can be -CH₂CH₂CH₂-.

R^{a1} each independently is -Z^{1'}-SiR^{a1'}_{p1'}R^{b1'}_{q1'}R^{c1'}_{r1'}.

The above Z^{1'} each independently is a single bond, an oxygen atom, or a divalent organic group. In one embodiment, Z^{1'} is a single bond. In one embodiment, Z^{1'} is an oxygen atom. Preferably, Z^{1'} is a divalent organic group.

In a preferred embodiment, those forming a siloxane bond with the Si atom to which Z^{1'} is bonded are not included in Z^{1'}. That is, in formula (S1), (Si-Z^{1'}-Si) does not include a siloxane bond.

Examples of the divalent organic group Z^{1'} includea group of the formula:

-(Z^{21'})_{z11'}-(O)_{z12'}-(Z^{22'})_{z13'}-

In the formula, Z^{21'} and Z^{22'} are divalent organic groups; z11' is 0 or 1; z12' is 0 or 1; and z13' is 0 or 1. At least one of z11' and z13' is 1.

Z^{1'} is preferably C₁₋₆-alkylene, -(CH₂)_{z5'}-O-(CH₂)_{z6'}- (in the formula, z5' is an integer of 0-6 such as an integer of 1-6, z6' is an integer of 0-6 such as an integer of 1-6, and [z5'+z6' } is ≥ 1), or -(CH₂)_{z7},-phenylene-(CH₂)_{z8'}- (in the formula, z7' is an integer of 0-6 such as an integer of 1-6, z8' is an integer of 0-6 such as an integer of 1-6, and preferably [z7'+z8'] is ≥ 1). The C₁₋₆ alkylene group may be straight or branched, but preferably straight. These groups may be substituted with one or more substituents selected from, for example, F, C₁₋₆-alkyl, C₂₋₆-alkenyl, and C₂₋₆-alkynyl, but preferably unsubstituted.

In a preferred embodiment, Z^{1'} is C₁₋₆-alkylene or - (CH₂)_{z7'}-phenylene-(CH₂)_{z8'}-, and preferably -phenylene-(CH₂)_{z8'}-. When Z^{1'} is the group, the light resistance, in particular ultraviolet resistance, of the cured layer to be formed can be further enhanced. Preferably, z7' is an integer of 0-6 and z8' is an integer of 1-6.

In another preferred embodiment, the above Z^{1'} is C₁₋₆-alkylene, and more preferably C₁₋₃-alkylene. When Z^{1'} has the structure, the light resistance, in particular ultraviolet resistance, of the cured layer to be formed can be further enhanced.

In one embodiment, Z^{1'} can be -CH₂CH₂CH₂-. In another embodiment, Z^{1'} can be -CH₂CH₂-.

The above R^{a1'} each independently is -Z^{1"}-SiR^{a1"}_{p1"}R^{b1"}_{q1"}R^{c1"}_{r1"}.

The above Z^{1"} each independently is a single bond, an oxygen atom, or a divalent organic group. In one embodiment, Z^{1"} is a single bond. In one embodiment, Z^{1"} is an oxygen atom. Preferably, Z^{1"} is a divalent organic group.

In a preferred embodiment, those forming a siloxane bond with the Si atom to which Z^{1"} is bonded are not included in Z^{1"}. That is, in formula (S1), (Si-Z^{1"}-Si) does not include a siloxane bond.

Examples of the divalent organic group Z^{1"} include a group of the formula:

-(Z^{21"})_{z11"}-(O)_{z12''}-(Z^{22"})_{z13"}-

In the formula, Z^{21"} and Z^{22"} are divalent organic groups; z11" is 0 or 1; z12" is 0 or 1; and z13" is 0 or 1. At least one of z11" and z13" is 1.

Z^{1"} is preferably C₁₋₆-alkylene, -(CH₂)_{z5"}-O-(CH₂)_{z6"}-(in the formula, z5" is an integer of 0-6 such as an integer of 1-6, z6" is an integer of 0-6 such as an integer of 1-6, and [z5"+z6"] is ≥ 1), or -(CH₂)_{z7''}-phenylene-(CH₂)_{z8''}-(in the formula, z7" is an integer of 0-6 such as an integer of 1-6, z8" is an integer of 0-6 such as an integer of 1-6, and preferably [z7"+z8"] is ≥ 1). The C₁₋₆-alkylene may be straight or branched, but it is preferably straight. These groups may be substituted with, for example, one or more substituents selected from F, C₁₋₆-alkyl, C₂₋₆-alkenyl, and C₂₋₆-alkynyl, but it is preferably unsubstituted.

In a preferred embodiment, Z^{1"} is C₁₋₆-alkylene or - (CH₂)_{z7"}-phenylene-(CH₂)_{z8"}-, and preferably -phenylene-(CH₂)_{z8"}-. When Z^{1"} is the group, the light resistance, in particular ultraviolet resistance, of the cured layer to be formed can be further enhanced. Preferably, z7" is an integer of 0-6 and z8" is an integer of 1-6.

In another preferred embodiment, the above Z^{1"} is C₁₋₆-alkylene group, and more preferably C₁₋₃-alkylene. When Z^{1"} has the structure, the light resistance, in particular ultraviolet resistance, of the cured layer to be formed can be further enhanced.

In one embodiment, Z^{1"} may be -CH₂CH₂CH₂-. In another embodiment, Z^{1'} may be -CH₂CH₂-.

The above R^{a1"} each independently is -Z^{1‴}-SiR^{b1‴}_{q1‴}R^{c1‴}_{r1‴}.

The above Z^{1‴} each independently is a single bond, an oxygen atom, or a divalent organic group. In one embodiment, Z^{1‴} is a single bond. In one embodiment, Z^{1‴} is an oxygen atom. Preferably, Z^{1‴} is a divalent organic group.

In a preferred embodiment, those forming a siloxane bond with the Si atom to which Z^{1‴} is bonded are not included in Z^{1‴}. That is, in formula (S1), (Si-Z^{1‴}-Si) does not include a siloxane bond.

Examples of the divalent organic group Z^{1‴} include a group of the formula:

-(Z^{21‴})_{z11}‴-(O)_{z12‴}-(Z^{22‴})_{z13‴}-

In the formula, Z^{21‴} and Z^{22‴} are divalent organic groups; z11‴ is 0 or 1; z12‴ is 0 or 1; and z13‴ is 0 or 1. At least one of z11‴ and z13‴ is 1.

Z^{1‴} is preferably C₁₋₆-alkylene, - (CH₂)_{z5‴}-O-(CH₂)_{z6‴}-(in the formula, z5‴ is an integer of 0-6 such as an integer of 1-6, z6‴ is an integer of 0-6 such as an integer of 1-6, and 8 z5‴+z6‴0 is ≥ 1), or -(CH₂)_{z7‴}-phenylene-(CH₂)_{z8‴}- (in the formula, z7‴ is an integer of 0-6 such as an integer of 1-6, z8‴ is an integer of 0-6 such as an integer of 1-6, and preferably [z7‴+z8‴] is ≥ 1). The C₁₋₆-alkylene may be straight or branched, but preferably straight. These groups may be substituted with, for example, one or more substituents selected from F, C₁₋₆-alkyl, C₂₋₆-alkenyl, and C₂₋₆-alkynyl, but preferably unsubstituted.

In a preferred embodiment, Z^{1‴} is C₁₋₆-alkylene or - (CH₂)_{z7‴}-phenylene-(CH₂)_{z8‴}-, and preferably -phenylene-(CH₂)_{z8‴}. When Z^{1"} is the group, the light resistance, in particular, ultraviolet resistance of the cured layer to be formed can be further enhanced. Preferably, z7‴ is an integer of 0-6 and z8‴ is an integer of 1-6.

In another preferred embodiment, the above Z^{1‴} is C₁₋₆-alkylene, and more preferably C₁₋₃-alkylene. When Z^{1‴} has the structure, the light resistance, in particular ultraviolet resistance, of the cured layer to be formed can be further enhanced.

In one embodiment, Z^{1‴} can be -CH₂CH₂CH₂-. In another embodiment, Z^{1‴} can be -CH₂CH₂-.

The above R^{b1‴} each independently is OH or a hydrolyzable group. Preferably, R^{b1‴} each independently is a hydrolyzable group.

R^{b1‴} each independently is preferably -OR^{h}, -OCOR^{h}, -ON=CR^{h}₂, -NR^{h}₂, - NHR^{h}, or halogen (in these formulas, R^{h} is substituted or unsubstituted C₁₋₄-alkyl), and more preferably -OR^{h} (that is, alkoxy). Examples of R^{h} include unsubstituted alkyl groups such as methyl, ethyl, propyl, isopropyl, n-butyl, and isobutyl; and substituted alkyl groups such as chloromethyl. Among such groups, alkyl, in particular unsubstituted alkyl, is preferable, and methyl or ethyl is more preferable. In one embodiment, R^{h} is methyl, and in another embodiment, R^{h} is ethyl.

The above R^{c1‴} each independently is H or a monovalent organic group. The monovalent organic group is a monovalent organic group excluding the above hydrolyzable group.

In R^{c1‴}, the monovalent organic group is preferably C₁₋₂₀-alkyl, more preferably C₁₋₆-alkyl, and even more preferably methyl.

The above q1‴ each independently is an integer of 0-3, and the above r1‴ each independently is an integer of 0-3. [q1‴+r1‴] is 3 in the (SiR^{b1‴}_{q1‴}R^{c1‴}_{r1‴}) unit.

Preferably, q1‴ is an integer of 1-3 and r1‴ is an integer of 0-2, more preferably, q1‴ is 2 or 3 and r1‴ is 0 or 1, and particularly preferably, q1‴ is 3.

The above R^{b1"} each independently is OH or a hydrolyzable group. Preferably, R^{b1"} each independently is a hydrolyzable group.

R^{b1"} each independently is preferably -OR^{h}, -OCOR^{h}, -ON=CR^{h}₂, -NR^{h}₂, - NHR^{h}, or halogen (in these formulas, R^{h} is substituted or unsubstituted C₁₋₄-alkyl), and more preferably -OR^{h} (that is, alkoxy). Examples of R^{h} include unsubstituted alkyl groups such as methyl, ethyl, propyl, isopropyl, n-butyl, and isobutyl, and substituted alkyl groups such as chloromethyl. Among such groups, alkyl, in particular unsubstituted alkyl, is preferable, and methyl or ethyl is more preferable. R^{h} is methyl in one embodiment, and R^{h} is ethyl in another embodiment.

The above R^{c1"} each independently is Hor a monovalent organic group. The monovalent organic group is a monovalent organic group excluding the above hydrolyzable group.

In R^{c1"}, the monovalent organic group is preferably C₁₋₂₀-alkyl, more preferably C₁₋₆-alkyl, and even more preferably methyl.

The above p1" each independently is an integer of 0-3, the above q1" each independently is an integer of 0-3, and the above r1" each independently is an integer of 0-3. [p1"+ q1"+r1"] is 3 in the (SiR^{a1"}_{p1"}R^{b1"}_{q1"}R^{c1"}_{r1"}) unit.

In one embodiment, p1" is 0.

In one embodiment, p1" may be each independently an integer of 1-3, an integer of 2-3, or 3 in each (SiR^{a1"}_{p1"}R^{b1"}_{q1"}R^{c1"}_{r1"}) unit. In a preferred embodiment, p1" is 3.

In one embodiment, q1" is each independently an integer of 1-3, preferably an integer of 2-3, and more preferably 3 in each (SiR^{a1"}_{p1"}R^{b1"}_{q1"}R^{c1"}_{r1"}) unit.

In one embodiment, p1" is 0, and q1" is each independently an integer of 1-3, preferably an integer of 2-3, and even more preferably 3 in each (SiR^{a1"}_{p1"}R^{b1"}_{q1"}R^{c1"}_{r1"}) unit.

The above R^{b1'} each independently is OH or a hydrolyzable group. Preferably, R^{b1'} each independently is a hydrolyzable group.

R^{b1'} each independently is preferably -OR^{h}, -OCOR^{h}, -ON=CR^{h}₂, -NR^{h}₂, - NHR^{h}, or halogen (in these formulas, R^{h} is substituted or unsubstituted C₁₋₄-alkyl), and more preferably -OR^{h} (that is, alkoxy ). Examples of R^{h} include unsubstituted alkyl groups such as methyl, ethyl-, propyl, isopropyl, n-butyl and isobutyl; and substituted alkyl such as chloromethyl. Among such groups, alkyl, in particular unsubstituted alkyl, is preferable, and methyl or ethyl is more preferable. In one embodiment, R^{h} is methyl and in another embodiment, R^{h} is ethyl.

The above R^{c1'} each independently is H or a monovalent organic group. The monovalent organic group is a monovalent organic group excluding the above hydrolyzable group.

In R^{c1'}, the monovalent organic group is preferably C₁₋₂₀-alkyl, more preferably C₁₋₆-alkyl, and even more preferably methyl.

The above p1' each independently is an integer of 0-3, the above q1' each independently is an integer of 0-3, and the above r1' each independently is an integer of 0-3. The sum of p1', q1', and r1' is 3 in the (SiR^{a1'}_{p1'}R^{b1'}_{q1'}R^{c1'}_{r1'}) unit.

In one embodiment, p1' is 0.

In one embodiment, p1' may be each independently an integer of 1-3, an integer of 2-3, or 3 in each (SiR^{a1'}_{p1'}R^{b1'}_{q1'}^{Rc1'}_{r1'}) unit. In a preferred embodiment, p1' is 3.

In one embodiment, q1' is each independently an integer of 1-3, preferably an integer of 2-3, and more preferably 3 in each (SiR^{a1'}_{p1'}R^{b1'}_{q1'}R^{c1'}_{r1'}) unit.

In one embodiment, p1' is 0, and q1' is each independently an integer of 1-3, preferably an integer of 2-3, and even more preferably 3 in each (SiR^{a1'}_{p1'}R^{b1'}_{q1'}R^{c1'}_{r1'}) unit.

The above R^{b1} each independently is OH or a hydrolyzable group. Preferably, R^{b1} each independently is a hydrolyzable group.

The above R^{c1} each independently is H or a monovalent organic group. The monovalent organic group is a monovalent organic group excluding the above hydrolyzable group.

In R^{c1}, the monovalent organic group is preferably C₁₋₂₀-alkyl, more preferably C₁₋₆-alkyl, and even more preferably methyl.

The above p1 each independently is an integer of 0-3, the above q1 each independently is an integer of 0-3, and the above r1 each independently is an integer of 0-3. [p1+q1+r1] is 3 in the (SiR^{a1}ₚ₁R^{b1}_{q1}R^{c1}ᵣ₁) unit.

In one embodiment, p1 is 0.

In one embodiment, p1 may be each independently an integer of 1-3, an integer of 2-3, or 3 in each (SiR^{a1}ₚ₁R^{b1}_{q1}R^{c1}ᵣ₁) unit. In a preferred embodiment, p1 is 3.

In one embodiment, q1 is each independently an integer of 1-3, preferably an integer of 2-3, and more preferably 3 in each (SiR^{a1}ₚ₁R^{b1}_{q1}R^{c1}ᵣ₁) unit.

In one embodiment, p1 is 0, and q1 is each independently an integer of 1-3, preferably an integer of 2-3, and even more preferably 3 in each (SiR^{a1}_{p1'}R^{b1}_{q1'}R^{c1}ᵣ₁) unit.

At least one R^{b1}, R^{b1'}, R^{b1"}, or R^{b1‴} is present in each group R^{Si}. That is, in formula (1) or (2), the group R^{Si} bonded to the N atom has a Si atom bonded to at least one OH or hydrolyzable group.

In other word, the group R^{Si} has at least one of the following:
a group represented by -X¹-SiR^{a1}ₚ₁R^{b1}_{q1}R^{c1}ᵣ₁ (wherein q1 is an integer of 1-3, q1 is preferably 2 or 3, and q1 is more preferably 3; provided that [p1+q1+r1] is 3.);
a group represented by -Z^{1'}-SiR^{a1'}_{p1'}R^{b1'}_{q1'}R^{c1'}_{r1'} (wherein q1' is an integer of 1-3, q1' is preferably 2 or 3, and q1' is more preferably 3; provided that [p1'+q1'+r1'] is 3.);
a group represented by -Z^{1"}-SiR^{a1"}_{p1"}R^{b1"}_{q1"}R^{c1"}_{r1"} (wherein q1" is an integer of 1-3, q1" is preferably 2 or 3, and q1" is more preferably 3; provided that [p1"+q1"+r1"] is 3.); and
a group represented by -Z^{1‴}-SiR^{b1‴}_{q1‴}R^{c1‴}_{r1‴} (wherein q1‴ is an integer of 1-3, q1‴ is preferably 2 or 3, and q1‴ is more preferably 3; provided that [q1‴+r1‴] is 3.).

It is preferable that the Si atom bonded to a hydroxyl group or hydrolyzable group be present in the terminal portion of the group R^{Si}. In other words, preferably, the Si atom to which a hydroxyl group or hydrolyzable group is bonded is present in the terminal portion of formulae (1) and (2).

The group R^{Si} preferably has at least one of the following:
a group represented by -X¹-SiR^{b1}_{q1}R^{c1}ᵣ₁ (wherein q1 is an integer of 1-3, q1 is preferably 2 or 3, and q1 is more preferably 3; provided that [q1+r1] is 3.);
a group represented by -Z^{1'}-SiR^{b1'}_{q1'}R^{c1'}_{r1'} (wherein q1' is an integer of 1-3, q1' is preferably 2 or 3, and q1' is more preferably 3; provided that [q1'+r1'] is 3.);
a group represented by -Z^{1"}-SiR^{b1"}_{q1"}R^{c1"}_{r1"} (wherein q1" is an integer of 1-3, q1" is preferably 2 or 3, and q1" is more preferably 3; provided that [q1"+r1"] is 3.); and
a group represented by -Z^{1‴}-SiR^{b1‴}_{q1‴}R^{c1‴}_{r1‴} (wherein q1‴ is an integer of 1-3, q1‴ is preferably 2 or 3, and q1‴ is more preferably 3; provided that [q1‴+r1‴] is 3.).

The above R^{Si} is preferably -X¹-SiR^{b1}₂R^{c1} or -X¹-SiR^{b1}₃, and more preferably -X¹-SiR^{b1}₃.

In one embodiment, when p1 is an integer of 1-3 in R^{Si}, R^{a1} is preferably -Z^{1'}-SiR^{b1'}₂R^{c1'} or -Z^{1'}-SiR^{b1'}₃, and more preferably -Z^{1'}-SiR^{b1'}₃. In the present embodiment, p1 is preferably 2 or 3, and more preferably 3.

In one embodiment, when p1' is an integer of 1-3 in R^{Si}, R^{a1'} is preferably -Z^{1"}-SiR^{b1"}₂R^{c1"} or -Z^{1"}-SiR^{b1"}₃, and more preferably -Z^{1"}-SiR^{b1"}₃. In the present embodiment, p1' is preferably 2 or 3, and more preferably 3.

In one embodiment, when p1" is an integer of 1-3 in R^{Si}, R^{a1"} is preferably -Z^{1‴}-SiR^{b1‴}₂R^{c1‴} or -Z^{1‴}-SiR^{b1‴}₃, and more preferably -Z^{1‴}-SiR^{b1‴}₃. In the present embodiment, p1" is preferably 2 or 3, and more preferably 3.

The compound of formula (1) or (2) can be produced by combining known methods.

As one embodiment, a method suited for producing the present fluoropolyether group-containing compound will be described below.

The present fluoropolyether group-containing compound can be produced by a method including: a step of allowing, for example, a compound of formula (1b) or (2b) and HSiM₃ (in the formula, M is each independently a halogen atom (that is, I, Br, Cl, or F) or C₁₋₆-alkoxy, preferably a halogen atom, and more preferably Cl) to react with each other, thereby affording a compound having -SiM₃ at the terminal (step (I)); and, if desired, a step of allowing it to react with a compound represented by R^{a1}L' (R^{a1} has the same definition as described above, and L' is a group that can be bonded to R^{a1}) and/or a compound represented by R^{b1}L" (R^{b1} has the same definition as described above, and L" is a group that can be bonded to R^{b1}) (step (II)).

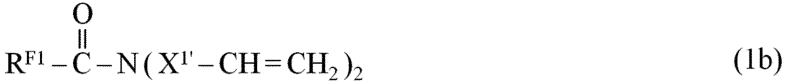

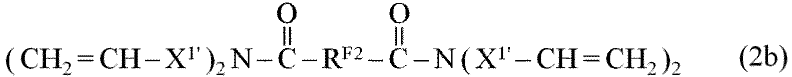

In formulas (1b) and (2b), R^{F1} and R^{F2} have the same definitions as R^{F1} and R^{F2} in the above formulas (1) and (2), respectively. X^{1'} is a structure with two fewer carbon atoms than formulas (1) and (2). That is, -X^{1'}-CH₂CH₂- derived from the structure represented by -X^{1'}-CH=CH₂ corresponds to X¹ in formulas (1) and (2).

The above step is preferably carried out in an appropriate solvent in the presence of an appropriate catalyst.

The suitable catalyst is not limited, and examples thereof include Pt, Pd, and Rh. The catalyst may be in any form, for example, in the form of a complex.

The suitable solvent is not limited as long as it does not adversely affect the reaction, and examples thereof include 1,3-bis(trifluoromethyl)benzene, perfluorobutyl ethyl ether, perfluorohexyl methyl ether, perfluorohexane, and hexafluorobenzene.

The reaction temperature in the reaction is not limited, and it is usually 0-100°C and preferably 50-80°C; the reaction time is not limited, and it is usually 60-600 minutes and preferably 120-300 minutes; and the reaction pressure is not limited, and it is -0.2 to 1 MPa (gauge pressure) and is conveniently ambient pressure.

In another embodiment, the present fluoropolyether group-containing compound can be produced by a method including: a step of allowing the compound having -SiM₃ at the terminal, obtained in the above step (I), to react with Hal-J-CH=CH₂ (in the formula, J is Mg, Cu, Pd, or Zn, and Hal is a halogen atom), and if desired, a compound represented by R^{a1}L' (R^{a1} has the same definition as described above, and L' is a group that can be bonded to R^{a1}) and/or a compound represented by R^{b1}L" (R^{b1} has the same definition as described above, and L" is a group that can be bonded to R^{b1}) (step (II')); and
a step of allowing the compound obtained in step (II') to react with HSiM₃ (in the formula, M is each independently a halogen atom or a C₁₋₆ alkoxy group), and if desired,
a compound represented by formula: R^{b1'}_{i'}L' (in the formula, R^{b1'} has the same definition as described above, L' is a group that can be bonded to R^{b1'}, and i' is an integer of 1-3), and if desired,
a compound represented by formula: R^{c1'}_{j'}L" (in the formula, R^{c1'} has the same definition as described above, L" is a group that can be bonded to R^{c1'}, and j' is an integer of 1-3).

The above step is preferably conducted in an appropriate solvent in the presence of an appropriate catalyst.

The suitable catalyst is not limited, and examples thereof include Pt, Pd, and Rh. The catalyst may be in any form, for example, in the form of a complex.

The suitable solvent is not limited as long as it does not adversely affect the reaction and examples thereof include 1,3-bis(trifluoromethyl)benzene, perfluorobutyl ethyl ether, perfluorohexyl methyl ether, perfluorohexane, and hexafluorobenzene.

The reaction temperature in the reaction is not limited and it is usually 0-100°C and preferably 50-80°C; the reaction time is not limited and it is usually 60-600 minutes and preferably 120-300 minutes; and the reaction pressure is not limited, and it is -0.2 to 1 MPa (gauge pressure) and is conveniently ambient pressure.

The compounds of formulae (1b) and (2b) can be produced by, for example, introducing a group having a double bond into the terminal portion of the compound of formula (1a) or (2a). Specifically, it can be obtained by allowing the terminal R^{x} moiety of the compound of the following formula (1a) or (2a) and an amine compound (for example, diallylamine) to react with each other.

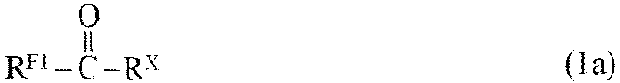

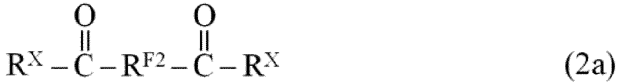

In formulas (1a) and (2a), R^{F1} and R^{F2} have the same definitions as R^{F1} and R^{F2} in formulas (1) and (2), respectively. R^{X} is, for example, H, OH, C₁₋₁₀-alkoxyl, a phenol group, sulfonyl, or halogen, and it is specifically OH.

The above step is preferably carried out in an appropriate solvent in the presence of an appropriate base.

The suitable base is not limited, and examples thereof include lithium hydroxide, sodium hydroxide, potassium hydroxide, sodium carbonate, potassium carbonate, sodium hydrogen carbonate, potassium hydrogen carbonate, and tertiary amines (triethylamine, pyridine, diisopropylethylamine, and 2,6-lutidine). The catalyst may be in any form, for example, in the form of a complex.

The suitable solvent is not limited as long as it does not adversely affect the reaction, and examples thereof include 1,3-bis(trifluoromethyl)benzene, perfluorobutyl ethyl ether, perfluorohexyl methyl ether, perfluorohexane and hexafluorobenzene.

The reaction temperature in the reaction is not limited, and it is usually 0-100°C and preferably 40-80°C; the reaction time is not limited, and it is usually 60-600 minutes and preferably 120-240 minutes; and the reaction pressure is not limited, and it is -0.2 to 1 MPa (gauge pressure) and is conveniently ambient pressure.

The reaction conditions upon producing the present fluoropolyether group-containing silane compound can be adjusted to a preferred range as appropriate by those skilled in the art.

Hereinafter, the present surface-treating agent will be described.

The present surface-treating agent contains the fluoropolyether group-containing compounds of formulae (1) and (2). In the cured layer to be formed using the composition of the present embodiment, the water- and oil-repellency on its surface is particularly good. This is because, in the fluoropolyether group-containing compound contained in the composition of the present embodiment, the proportion of oxygen atoms contained in R^{F} is small (for example, smaller than the case where the e/f value is < 0.9), that is, the proportion of fluorine atoms is large.

In one embodiment, the lower limit of the ratio (molar ratio) of the compound (2) to the compounds (1) and (2) in total in the present surface-treating agent may be preferably 0.001, more preferably 0.002, even more preferably 0.005, still more preferably 0.01, particularly preferably 0.02, and especially 0.05. The upper limit of this molar ratio may be preferably 0.35, more preferably 0.30, even more preferably 0.20, and still more preferably 0.15 or 0.10. Further, this molar ratio is preferably 0.001-0.30, more preferably 0.001-0.20, even more preferably 0.002-0.20, still more preferably 0.005-0.20, and particularly preferably 0.01-0.20, such as 0.02-0.20 (specifically, ≤ 0.15) or 0.05-0.20 (specifically, ≤ 0.15). By including the compounds in the above range, the composition of the present embodiment can contribute to formation of a cured layer having good friction durability.

In one embodiment, the lower limit of the above molar ratio may be as described above, and The upper limit thereof may be preferably 0.70, more preferably 0.60, more preferably 0.50, even more preferably 0.40, still more preferably 0.30 such as 0.20, and specifically 0.10. Further, the ratio may be 0.001-0.70, 0.001-0.60, 0.001-0.50, 0.002-0.40, 0.005-0.30, or 0.01-0.20, and it is, for example, 0.02-0.20 (specifically, ≤ 0.15) or 0.05-0.20 (specifically, ≤ 0.15).

In one embodiment, the lower limit of the ratio (molar ratio) of the compound (1) to the compounds (1) and (2) in total in the present surface-treating agent may be preferably 0.001, more preferably 0.002, even more preferably 0.005, still more preferably 0.01, particularly preferably 0.02, and especially 0.05; and the upper limit may be preferably 0.70, more preferably 0.60, more preferably 0.50, even more preferably 0.40, still more preferably 0.30 such as 0.20, and specifically 0.10. Thus, the ratio may be 0.001-0.70, 0.001-0.60, 0.001-0.50, 0.002-0.40, 0.005-0.30, or 0.01-0.20, and it is, for example, 0.02-0.20 (specifically, ≤ 0.15) or 0.05-0.20 (specifically, ≤ 0.15).

The present surface-treating agent can impart water-repellency, oil-repellency, antifouling property, surface lubricity, and friction durability to a substrate, and may be suitably used as an antifouling coating agent or water-proof coating agent, although there are no limitations.

The present surface-treating agent further contains a fluorine-containing oil, for example, a (non-reactive) fluoropolyether compound that can be understood as a fluorine-containing oil, preferably a perfluoro(poly)ether compound (hereinafter, collectively referred to as a "fluorine-containing oil"), and may further contain, for example, a solvent, a (non-reactive) silicone compound that can be understood as a silicone oil (hereinafter, referred to as a "silicone oil"), a catalyst, a surfactant, a polymerization inhibitor, and a sensitizer.

Examples of the above solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, isopropanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide and N,N-dimethylacetamide; ether alcohols such as methyl cellosolve, cellosolve, isopropyl cellosolve, butyl cellosolve, and diethylene glycol monomethyl ether; diethylene glycol monoethyl ether acetate; and fluorine-containing solvents such as 1,1,2-trichloro-1,2,2-trifluoroethane, 1,2-dichloro-1,1,2,2-tetrafluoroethane, dimethyl sulfoxide, 1,1-dichloro-1,2,2,3,3-pentafluoropropane (HCFC 225), Zeorora H, HFE 7100, HFE 7200, and HFE 7300. Alternatively, the solvent may be a mixed solvent of two or more of such solvents.

The fluorine-containing oil is not limited, and examples thereof include a compound (perfluoro(poly)ether compound) of formula (3).

Rf⁵-(OC₄F₈)_{a'}-(OC₃F₆)_{b'}-(OC₂F₄)_{c'}-(OCF₂)_{d'}-Rf⁶ ... (3)

In the formula, Rf⁵ is C₁₋₁₆-alkyl optionally substituted with one or more F (preferably, C₁₋₁₆-perfluoroalkyl), Rf⁶ is H, F, or C₁₋₁₆-alkyl optionally substituted with one or more F (preferably, C₁₋₁₆-perfluoroalkyl), Fand Rf⁵ and Rf⁶ are each independently, more preferably, C₁₋₃-perfluoroalkyl.

a', b', c', and d' respectively represent the numbers of 4 repeating units of perfluoro(poly)ether constituting the main backbone of the polymer and are mutually independently an integer of 0-300, and [a'+b'+c'+d'] is ≥ 1, preferably 1-300, and more preferably 20-300. The order of the repeating units in parentheses provided with a subscript a', b', c', or d' is not limited. Among these repeating units, - (OC₄F₈)- may be any of -(OCF₂CF₂CF₂CF₂)-, - (OCF (CF₃)CF₂CF₂)-, -(OCF₂CF(CF₃)CF₂)-, -(OCF₂CF₂CF(CF₃))-, - (OC (CF₃)₂CF₂)-, -(OCF₂C(CF₃)₂)-, -(OCF (CF₃)CF (CF₃))-, - (OCF (C₂F₅)CF₂)-, and (OCF₂CF(C₂F₅)) -, and it is preferably - (OCF₂CF₂CF₂CF₂)-. -(OC₃F₆)- may be any of -(OCF₂CF₂CF₂)-, - (OCF (CF₃)CF₂)-, and (OCF₂CF(CF₃))-, and it is preferably - (OCF₂CF₂CF₂)-. -(OC₂F₄)- may be any of -(OCF₂CF₂)- and (OCF (CF₃))-, and it is preferably -(OCF₂CF₂)-.

Examples of the perfluoro(poly)ether compound of formula (3) include a compound of any of the following formulae (3a) and (3b) (which may be used singly or as a mixture of two or more).

Rf⁵-(OCF₂CF₂CF₂)_{b"}-Rf⁶ ... (3a)

Rf⁵-(OCF₂CF₂CF₂CF₂)_{a"}-(OCF₂CF₂CF₂)_{b"}-(OCF₂CF₂)_{c"}-(OCF₂)_{d"}-Rf⁶ ... (3b)

In these formulas, Rf⁵ and Rf⁶ are as described above; in formula (3a), b" is an integer of 1-100; and in formula (3b), a'' and b'' are each independently an integer of 0-30, and c'' and d'' are each independently an integer of 1-300. The order of the repeating units in parentheses provided with a subscript a'', b'', c'', or d'' is not limited.

From another viewpoint, the fluorine-containing oil may be a compound of the formula Rf³-F (wherein Rf³ is C₅₋₁₆-perfluoroalkyl). The fluorine-containing oil may be a chlorotrifluoroethylene oligomer.

The above fluorine-containing oil may have an average molecular weight of 500-10,000. The molecular weight of the fluorine-containing oil may be measured using gel permeation chromatography (GPC).

The fluorine-containing oil may be contained in an amount of, for example, 0-50 mass%, preferably 0-30 mass%, and more preferably 0-5 mass% based on the composition of the present surface-treating agent.

The fluorine-containing oil contributes to increasing the surface lubricity of a layer formed of the present surface-treating agent.

For example, the above silicone oil may be a linear or cyclic silicone oil having ≤ 2,000 siloxane bonds. The linear silicone oil may be so-called a straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with e.g. alkyl, aralkyl, polyether, higher fatty acid ester, fluoroalkyl, amino, epoxy, carboxyl, or alcohol. Examples of the cyclic silicone oil include cyclic dimethylsiloxane oil.

In the present surface-treating agent, the silicone oil may be contained in an amount of, for example, 0-300 parts by mass, and preferably 50-200 parts by mass, based on total 100 parts by mass of the present fluoropolyether group-containing silane compound (in the case of two or more kinds, the total thereof, and the same applies below).

The silicone oil contributes to increasing the surface lubricity of a layer formed of the present surface-treating agent.

Examples of the above catalyst include an acid (for example, acetic acid, trifluoroacetic acid), a base (for example, ammonia, triethylamine, diethylamine) and a transition metal (for example, Ti, Ni, Sn).

The catalyst promotes hydrolysis and dehydrative condensation of the fluoropolyether group-containing silane compound of the present disclosure, and promotes formation of a layer formed of the present surface-treating agent.

Examples of the other components include, in addition to those described above, tetraethoxysilane, methyltrimethoxysilane, 3-aminopropyltrimethoxysilane, 3-glycidoxypropyltrimethoxysilane, and methyltriacetoxysilane.

In the present surface-treating agent, the content of compound (2) is 0.001-70 mol%, and may be contained at ≤ 60 mol%, or ≤ 50 mol%, and may be contained at ≥ 0.01 mol%, or ≥ 0.1 mol%, relative to the total of the compound (1), the compound (2), and the fluorine-containing oil. For example, the compound (2) may be contained at 1-70 mol%, or may be contained at 5-50 mol%, relative to the total of the compound (1), the compound (2), and the fluorine-containing oil.

The present surface-treating agent contains the compound (1), the compound (2), and the fluorine-containing oil.

In the present surface-treating agent, the fluorine-containing oil is contained at 0.001-50 mol%, and may be contained at ≥ 0.01 mol%, or ≥ 1.0 mol%, and may be contained at ≤ 40 mol%, ≤ 30 mol%, or ≤ 10 mol%, relative to the total of the compound (1), the compound (2), and the fluorine-containing oil. For example, the fluorine-containing oil may be contained at 0.01-40 mol%, relative to the total of the compound (1), the compound (2), and the fluorine-containing oil.

In the present surface-treating agent, the compound (2) is contained at 0.001-70 mol% and the fluorine-containing oil is contained at 0.001-50 mol%, it is preferable that the compound (2) be contained at 0.01-60 mol% and the fluorine-containing oil be contained at 0.01-40 mol%, and it is more preferable that the compound (2) be contained at 0.1-50 mol% and the fluorine-containing oil be contained at 0.1-30 mol%, relative to the total of the compound (1), the compound (2), and the fluorine-containing oil.

The present surface-treating agent can contribute to formation of a cured layer having good friction durability. Furthermore, in the cured layer to be formed using the present surface-treating agent, the water- and oil-repellency on its surface is particularly good. This is because, in the fluoropolyether group-containing compound contained therein, the proportion of oxygen atoms contained in R^{F} is small (for example, smaller than the case where the e/f value is < 0.9), and the proportion of fluorine atoms is large.

In one embodiment, the compound formula (2) may be contained at 0.001 to < 50 mol%, 0.1 to < 50 mol%, 1 to < 50 mol%, or , for example, 10 to < 50 mol%, relative to the total of the compounds (1) and (2).

In one embodiment, the compound (1) may be contained at 0.001 to < 50 mol%, 0.1 to < 50 mol%, 10 to < 50 mol%, or , for example, 20 to < 50 mol% or 30 to < 50 mol%, relative to the total of the compounds (1) and (2).

In one embodiment, the compound (2) may be contained at 30 to < mol%, 35 to < 65 mol%, or 40 to < 60 mol%, relative to the total of the compounds (1) and (2).

The present surface-treating agent can be used for surface treatment of a substrate.

The present surface-treating agent can be formed into a pellet by impregnating a porous material such as a porous ceramic material or that obtained by solidifying a metal fiber such as a steel wool, therewith. The pellet can be used in, for example, vacuum deposition.

Hereinafter, an article of the present disclosure (also referred to as "the present article" hereinafter ) will be described.

The present article includes: a substrate; and a layer (surface-treating layer) on the surface of the substrate, where the layer is formed of the present surface-treating agent).

The substrate that can be used may be composed of any suitable material such as glass, a resin (which may be a natural or synthetic resin, for example, a common plastic material, and may be in the form of e.g. a plate, or a film), a metal, ceramics, a semiconductor (such as silicon and germanium), a fiber (such as woven fabric and nonwoven fabric), fur, leather, a wood material, a ceramic material, a stone material, or a building material.

For example, when the article to be produced is an optical member, the material constituting the surface of the substrate may be a material for an optical member, such as glass or a transparent plastic. When the article to be produced is an optical member, some layer (or film) such as a hard coat layer or an antireflection layer may be formed on the surface (the outermost layer) of the substrate. The antireflection layer may be any of a single-layer antireflection layer and a multi-layer antireflection layer. Examples of inorganic substances that can be used in the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃. One of these inorganic substances may be used singly, or two or more may be used in combination (for example, as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration, may have e.g. an insulating layer, an adhesive layer, a protecting layer, a decorated frame layer (I-CON), an atomizing film layer, a hard coating layer, a polarizing film, a phase difference film, or a liquid crystal display module.

The shape of the substrate is not limited. The surface region of the substrate on which a layer formed of the surface-treating agent of the present disclosure is to be formed is at least a part of the substrate surface, and may be suitably determined according to e.g. the application and specific specifications of an article to be produced.

The substrate, or at least the surface portion thereof, may be composed of a material originally having a hydroxyl group. Examples of the material include glass as well as metal (in particular, base metal) wherein a natural oxidized film or a thermal oxidized film is formed on the surface, ceramics and semiconductors. Alternatively, when the substrate has an insufficient amount of a hydroxyl group or when the substrate originally does not have a hydroxyl group as in resin, a pre-treatment may be performed on the substrate to thereby introduce or increase a hydroxyl group on the surface of the substrate. Examples of the pre-treatment include a plasma treatment (for example, corona discharge) and ion beam irradiation. The plasma treatment can be suitably utilized to not only introduce or increase a hydroxyl group on the substrate surface, but also clean the substrate surface (remove foreign matter). Another example of the pre-treatment includes a method wherein a monolayer of a surface adsorbent having a carbon-carbon unsaturated bonding group is formed on the surface of the substrate by e.g. a LB method (a Langmuir-Blodgett method), or a chemical adsorption method, beforehand, and thereafter cleaving the unsaturated bond under an atmosphere containing e.g. oxygen or nitrogen.

Alternatively, the substrate may be that of which at least the surface consists of a material comprising other reactive group such as a silicone compound having one or more Si-H group or alkoxysilane.

Then, on the surface of the substrate, a layer of the present surface-treating agent is formed, this layer is post-treated as necessary, and thereby a layer is formed from the s present urface-treating agent.

The layer of the present surface-treating agent can be formed by applying the present surface-treating agent on the surface of the substrate such that the surface-treating agent coats the surface. The coating method is not limited. For example, a wet coating method and a dry coating method can be used.

Examples of the wet coating method include dip coating, spin coating, flow coating, spray coating, roll coating, and gravure coating.

Examples of the dry coating method include deposition (usually, vacuum deposition), sputtering, and CVD. Specific examples of the deposition method (usually, a vacuum deposition method) include resistive heating, high-frequency heating using e.g. electron beam or microwave, and ion beam. Specific examples of the CVD method include plasma-CVD, optical CVD, and thermal CVD.

Furthermore, coating by an atmospheric pressure plasma method can be performed.

When using the wet coating method, the present surface-treating agent can be applied to the substrate surface after being diluted with a solvent. From the viewpoint of the stability of the present surface-treating agent and the volatility of solvents, the following solvents are preferably used: perfluoroaliphatic C₅₋₁₂-hydrocarbons (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin (registered trademark) AC-6000 manufactured by Asahi Glass Co., Ltd., and 1,1,2,2,3,3,4-heptafluorocyclopentane (such as Zeorora (registered trademark) H manufactured by Zeon Corporation)); alkyl perfluoroalkyl ethers (the perfluoroalkyl group and the alkyl group may be straight or branched) such as hydrofluoroether (HFE) (such as perfluoropropylmethyl ether (C₃F₇OCH₃) (such as Novec (trademark) 7000 manufactured by Sumitomo 3M Limited), perfluorobutyl methyl ether (C₄F₉OCH₃) (such as Novec (trademark) 7100 manufactured by Sumitomo 3M Limited), perfluorobutyl ethyl ether (C₄F₉OC₂H₅) (such as Novec (trademark) 7200 manufactured by Sumitomo 3M Limited), and perfluorohexyl methyl ether (C₂F₅CF(OCH₃)C₃F₇) (such as Novec (trademark) 7300 manufactured by Sumitomo 3M Limited), or CF₃CH₂OCF₂CHF₂ (such as Asahiklin (registered trademark) AE-3000 manufactured by Asahi Glass Co., Ltd.)). One of these solvents can be used singly, or two or more can be used as a mixture. In particular, hydrofluoroether is preferable, and perfluorobutyl methyl ether (C₄F₉OCH₃) and/or perfluorobutyl ethyl ether (C₄F₉OC₂H₅) is particularly preferable.

When using the dry coating method, the present surface-treating agent may be directly subjected to the dry coating method, or may be diluted with the above solvent before being subjected to the dry coating method.

A layer of the surface-treating agent is preferably formed such that the present surface-treating agent coexists in the layer with a catalyst for hydrolysis and dehydrative condensation. Conveniently, in the case of a wet coating method, the present surface-treating agent is diluted with a solvent, and then, immediately before application to the substrate surface, a catalyst may be added to the diluted solution of the present surface-treating agent. In the case of a dry coating method, the present surface-treating agent to which a catalyst has been added is directly used to a deposition (usually vacuum deposition) treatment, or a pellet-like material may be used to a deposition (usually vacuum deposition) treatment, wherein the pellet is obtained by impregnating a porous body of metal such as iron or copper with the present surface-treating agent to which the catalyst has been added.

The catalyst may be any suitable acid or base. The acid catalyst may be, for example, acetic acid, formic acid, or trifluoroacetic acid. The base catalyst may be, for example, ammonia or organic amine.

In the above-described manner, a layer derived from the present surface-treating agent is formed on the substrate surface, and the present article is produced. The layer thus obtained has both high surface lubricity and high friction durability. The above layer may have not only high friction durability but also have, depending on the compositional features of the surface-treating agent used, water-repellency, oil-repellency, antifouling property (for example, preventing fouling such as fingerprints from adhering), waterproof property (preventing water from penetrating into electronic components), surface lubricity (or lubricity, such as removability by wiping for fouling including fingerprints and the like and excellent tactile sensations to the fingers), and may be suitably utilized as a functional thin film.

That is to say, the present disclosure further relates to an optical material having a layer derived from the present surface-treating agent in the outermost layer.

The optical material preferably includes a wide variety of optical materials in addition to optical materials relating to e.g. displays as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article having a layer obtained according to the present disclosure may be, but is not limited to, an optical member. Examples of the optical member include lenses of e.g. glasses; front surface protective plates, antireflection plates, polarizing plates, and anti-glare plates for displays such as PDPs and LCDs; touch panel sheets for devices such as mobile phones and personal digital assistants; disc surfaces of optical discs such as Blu-ray (registered trademark) discs, DVD discs, CD-Rs, and MOs; optical fibers; and display surfaces of watches and clocks.

The article having a layer obtained according to the present disclosure may be an automobile interior or exterior member. Examples of the exterior material include the following: windows, light covers, and external camera covers. Examples of the interior material include the following: instrument panel covers, navigation system touch panels, and decorative interior materials.

The article having a layer obtained according to the present disclosure may be medical equipment or a medical material.

The thickness of the above layer is not limited. The thickness of the above layer in the case of an optical member is in the range of 1-50 nm, 1-30 nm, and preferably 1-15 nm, from the viewpoint of optical performance, surface lubricity, friction durability, and antifouling property.

### Examples

The present disclosure will be described more specifically through the following Examples. In the Examples, all chemical formulas shown below indicate average compositional features, and the order of repeating units (such as (OCF₂CF₂) and (OCF₂)) constituting perfluoropolyether is arbitrary.

### (Synthetic Example 1)

5.0 g of a mixture of CF₃-(OCF₂CF₂)ₘ-(OCF₂)ₙ-COOH (m ≈ 27 and n ≈ 25) and HOCOCF₂-(OCF₂CF₂)ₘ-(OCF₂)ₙ-COOH (m ≈ 27 and n ≈ 25) (provided that the content of HOCOCF₂-(OCF₂CF₂)ₘ-(OCF₂)ₙ-COOH was 8 mol%) was dissolved in 5.0 g of 1,3-bis (trifluoromethyl) benzene and cooled with ice. After adding 0.3 g of thionyl chloride dropwise to that solution, 0.01 mg of N,N-dimethylformamide was further added thereto, and the mixture was stirred at room temperature for 24 hours. Thionyl chloride was distilled off from this reaction solution, then 0.18 g of diallylamine and 0.2 g of triethylamine were added thereto, and the mixture was heated to 50°C and stirred for 3 hours. The end point of the reaction was confirmed by ¹⁹F-NMR according to that the chemical shift of the carbonyl group α position -CF₂- of CF₃-(OCF₂CF₂)ₘ-(OCF₂)ₙ-COOH shifted to a low magnetic field, and by ¹H-NMR according to that the methylene proton at the amino group α position of diallylamine shifted to a low magnetic field. IN-hydrochloric acid was added to the reaction solution, and the separated lower phase was washed with water, dried using magnesium sulfate, and concentrated. The obtained concentrated product was dissolved in perfluorohexane and washed with acetone three times, thereby affording a mixture containing a polyether group-containing compound (A) and a polyether group-containing compound (A').
Polyether group-containing compound (A): 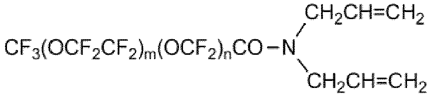 (m ≈ 27 and n ≈ 25)
Polyether group-containing compound (A'): 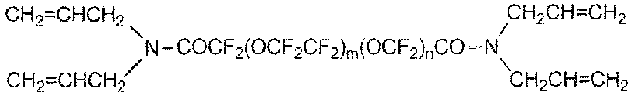 (m ≈ 27 and n ≈ 25)

### (Synthetic Example 2)

5.0 g of the mixture obtained in Synthetic Example 1 was dissolved in 10 ml of 1,3-bis(trifluoromethyl)benzene, 0.02 g of triacetoxymethylsilane and 0.06 ml of a xylene solution containing 2% Pt complex of 1,3-divinyl-1,1,3,3-tetramethyldisiloxane were added thereto, then 1.0 g of trichlorosilane was introduced, and the mixture was stirred at 10°C for 30 minutes. Subsequently, that solution was heated to 60°C and stirred for 4 hours. Thereafter, from the obtained solution, volatiles were distilled off under reduced pressure, then a mixed solution of 0.1 g of methanol and 3.0 g of trimethyl orthoformate was added thereto, and the mixture was heated to 60°C and stirred for 3 hours. Thereafter, purification was performed, and thus 4.7 g of a mixture containing the following polyether group-containing compound (B) and polyether group-containing compound (B') having trimethoxysilyl groups at terminals was obtained (the e/f ratio was 1.08).
Polyether group-containing compound (B): 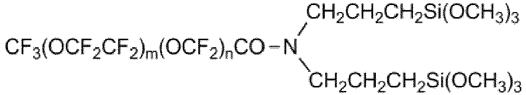 (m ≈ 27 and n ≈ 25)
Polyether group-containing compound (B'): 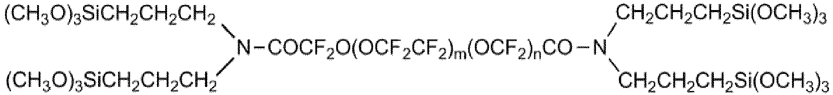 (m ≈ 27 and n ≈ 25)

### (Synthetic Example 3)

The same operations as in Synthetic Example 1 were carried out except that 6.0 g of a mixture containing CF₃-(OCF₂CF₂)ₘ-(OCF₂)ₙ-COOH (m ≈ 33 and n ≈ 32) and HOCOCF₂-(OCF₂CF₂)ₘ-(OCF₂)ₙ-COOH (m ≈ 33 and n ≈ 32) (provided that the content of HOCOCF₂-(OCF₂CF₂)ₘ-(OCF₂)ₙ-COOH was 11 mol%) was used, and thus 6.0 g of a mixture containing a polyether group-containing compound (C) and a polyether group-containing compound (C') was obtained.
Polyether group-containing compound (C): 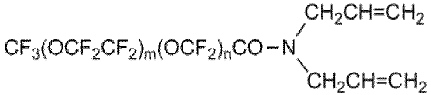 (m ≈ 33 and n ≈ 32)
Polyether group-containing compound (C'): 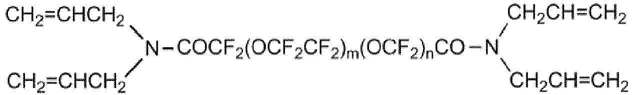 (m ≈ 33 and n ≈ 32)

### (Synthetic Example 4)

The same operations as in Synthetic Example 2 were carried out except that 5.8 g of the mixture obtained in Synthetic Example 3 was used, and thus 5.8 g of a mixture containing a polyether group-containing compound (D) and a polyether group-containing compound (D') was obtained (the e/f ratio was 1.03).
Polyether group-containing compound (D): 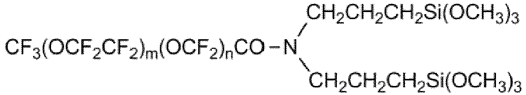 (m ≈ 33 and n ≈ 32)
Polyether group-containing compound (D'): 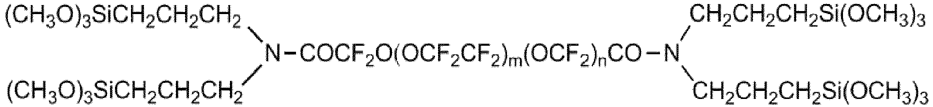 (m ≈ 33 and n ≈ 32)

### (Synthetic Example 5)

The same operations as in Synthetic Example 1 were carried out except that 6.0 g of a mixture containing CF₃-(OCF₂CF₂)ₘ-(OCF₂)ₙ-COOH (m ≈ 27 and n ≈ 25), HOCOCF₂-(OCF₂CF₂)ₘ-(OCF₂)ₙ-COOH (m ≈ 27 and n ≈ 25), and CF₃-(OCF₂CF₂)ₘ-(OCF₂)ₙ-OCF₃ (m ≈ 27 and n ≈ 25) (provided that the content of HOCOCF₂-(OCF₂CF₂)ₘ-(OCF₂)ₙ-COOH was 29 mol% and the content of CF₃-(OCF₂CF₂)ₘ-(OCF₂)ₙ-OCF₃ was 24 mol%) was used, and thus 5.9 g of a mixture containing a polyether group-containing compound (E), a polyether group-containing compound (E'), and a polyether group-containing compound (E") was obtained.
Polyether group-containing compound (E): 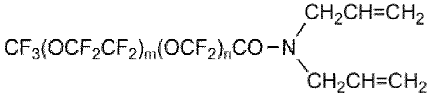 (m ≈ 27 and n ≈ 25)
Polyether group-containing compound (E'): 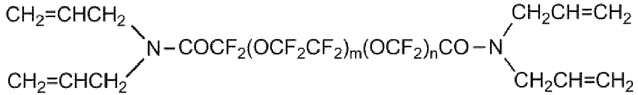 (m ≈ 27 and n ≈ 25)
Polyether group-containing compound (E"):

   CF₃(OCF₂CF₂)ₘ(OCF₂)ₙOCF₃

   (m ≈ 27 and n ≈ 25)

### (Synthetic Example 6)

The same operations as in Synthetic Example 2 were carried out except that 5.9 g of the mixture obtained in Synthetic Example 5 was used, and thus 5.8 g of a mixture containing a polyether group-containing compound (F), a polyether group-containing compound (F'), and a polyether group-containing compound (F") was obtained (the e/f ratio was 1.08).
Polyether group-containing compound (F): 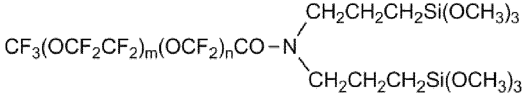 (m ≈ 27 and n ≈ 25)
Polyether group-containing compound (F'): 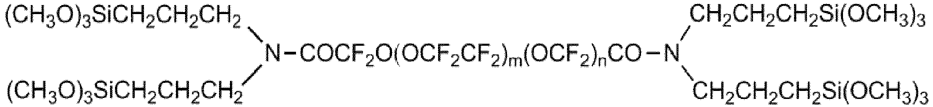 (m ≈ 27 and n ≈ 25)
Polyether group-containing compound (F"):

   CF₃(OCF₂CF₂)ₘ(OCF₂)ₙOCF₃

   (m ≈ 27 and n ≈ 25)

### (Example 1)

The mixture containing the polyether group-containing compound (B) and the polyether group-containing compound (B') obtained in the above Synthetic Example 2 was dissolved in hydrofluoroether (Novec HFE-7200, manufactured by 3M) so as to have a concentration of 0.1 mass%, and thus a surface-treating agent (1) was prepared.

### (Example 2)

The mixture containing the polyether group-containing compound (D) and the polyether group-containing compound (D') obtained in the above Synthetic Example 4 was dissolved in hydrofluoroether (Novec HFE-7200, manufactured by 3M) so as to have a concentration of 0.1 mass%, and thus a surface-treating agent (2) was prepared.

### (Example 3)

The mixture containing the polyether group-containing compound (F), the polyether group-containing compound (F'), and the polyether group-containing compound (F") obtained in the above Synthetic Example 6 was dissolved in hydrofluoroether (Novec HFE-7200, manufactured by 3M) so as to have a concentration of 0.1 mass%, and thus a surface-treating agent (3) was prepared.

### (Comparative Examples 1 and 2)

Comparative surface-treating agents (1) and (2) were respectively prepared in the same manner as in Example 2 except that the following control compounds (1) and (2) were used in place of the mixture containing the polyether group-containing compound (D) and the polyether group-containing compound (D').
Control Compound (1)

   CF₃CF₂CF₂-(OCF₂CF₂CF₂)₂₃-OCF₂CF_{2C}H₂OCH₂CH₂CH₂Si(OCH₃)₃
Control Compound (2)

   CF₃CF₂CF₂CF₂CF₂CF₂CH₂CH₂Si(OCH₂CH₃)₃

### (Static contact angle)

The static contact angle was measured by the following method using a fully automatic contact angle meter DropMaster 700 (manufactured by Kyowa Interface Science Co., Ltd.).

### <Method for measuring static contact angle>

The static contact angle was determined by dripping 2 µL of water from a microsyringe onto a horizontally placed substrate and taking a still image with a video microscope 1 second after the dripping.

### (Formation of cured film)

The surface-treating agents (1)-(3) and the comparative surface-treating agents (1)-(2) were used to form cured films as follows.

A surface-treating agent or a comparative surface-treating agent was applied to a chemically tempered glass ("Gorilla" glass, manufactured by Corning Incorporated, thickness 0.7 mm) using a spin coater.

The spin coating conditions were 300 rpm for 3 seconds and 2000 rpm for 30 seconds.

The coated glass was heated at 150°C for 30 minutes in a thermostatic oven in air to form a cured film.

### [Evaluation of cured film characteristics]

Characteristics of the obtained cured film were evaluated as follows.

### <Static contact angle>

### (Initial evaluation)

First, as an initial evaluation, after the cured film was formed, the static water contact angle of the surface with which nothing was brought into contact yet was measured.

### (Evaluation after wiping with ethanol)

The cured film was wiped back and forth five times with Kimwipe (trade name, manufactured by Jujo Kimberly Co., Ltd.) sufficiently soaked with ethanol, and dried. After drying, the static water contact angle of the cured film was measured.

### <Fingerprint adherability and removability by wiping>

### (Fingerprint adherability)

A finger was pressed against a cured film formed using a surface-treating agent or a comparative surface-treating agent, and how easily a fingerprint adheres was visually judged. Evaluations were made according to the following criteria:
A: Fingerprint unlikely adhered, or not noticeable even when adhered.
B: Adhered fingerprint was little, but fingerprint sufficiently confirmed.
C: Fingerprint adhered as clearly as fingerprint on untreated glass substrate.

### (Fingerprint removability by wiping)

After the above fingerprint adherability test, the adhered fingerprint was wiped off back and forth five times with Kimwipe (trade name, manufactured by Jujo Kimberly Co., Ltd.), and how easily the adhered fingerprint was wiped off was visually judged. Evaluations were made according to the following criteria:
A: Fingerprint completely wiped off.
B: Fingerprint wiping marks remained.
C: Fingerprint wiping marks spread, and difficult to remove.

The results of the series of evaluations are summarized in Table 1 below.

**[Table 1]**

| Treatment agent | | Contact angle (degree) | | Fingerprint adherability and removability by wiping | |
|---|---|---|---|---|---|
| | | Initial evaluation | After wiping with ethanol | Fingerprint adherability | Fingerprint removability by wiping |
| Surface-treating agent (1) | Example 1 | 115 | 115 | A | A |
| Surface-treating agent (2) | Example 2 | 114 | 114 | A | A |
| Surface-treating agent (3) | Example 3 | 115 | 115 | A | A |
| Comparative surface-treating agent (1) | Comparative Example 1 | 113 | 112 | A | B |
| Comparative surface-treating agent (2) | Comparative Example 2 | 105 | 103 | B | C |

The contact angles of the cured films formed using the surface-treating agents (1)-(3) had good initial evaluation values, and furthermore, they were not decreased even when the films were wiped using ethanol. On the other hand, the contact angles of the cured films formed using the comparative surface-treating agents (1) and (2) were decreased when the films were wiped using ethanol. This is considered to be because the cured films formed with the comparative surface-treating agents (1) and (2) have poor chemical resistance (durability against solvents).

### [Evaluation of cured film frictional resistance]

The frictional resistance of the obtained cured film was evaluated as follows.

### <Frictional resistance test against eraser>

Using a rubbing tester (manufactured by Shinto Scientific Co., Ltd.), the water resistance contact angle was measured every 2,500 rubs under the following conditions, and the test was continued until it reached 10,000 rubs or until the angle became less than 100 degrees. The test environment conditions were 25°C and a humidity of 40% RH.
Eraser: Raber Eraser (manufactured by Minoan)
Contact area: 6 mmφ
Moving distance (one way): 30 mm
Moving speed: 3,600 mm/min
Load: 1 kg/6 mmφ

The results of the above evaluation are summarized in Table 2 below. In the table, "-" means that the measurement was not performed.

**[Table 2]**

| Treatment agent | | Eraser friction count | | | | |
|---|---|---|---|---|---|---|
| | | 0 times | 2,500 times | 5,000 times | 7,500 times | 10,000 times |
| Surface-treating agent (1) | Example 1 | 115 | 114 | 116 | 112 | 108 |
| Surface-treating agent (2) | Example 2 | 114 | 114 | 115 | 114 | 111 |
| Surface-treating agent (3) | Example 3 | 115 | 115 | 115 | 113 | 110 |
| Comparative surface-treating agent (1) | Comparative Example 1 | 113 | 89 | - | - | - |

### Industrial Applicability

The fluoropolyether group-containing compound of the present disclosure can be suitably utilized to form a surface-treating layer on the surface of a variety of substrates, in particular optical members for which friction durability is required.

## Claims

1. A surface-treating agent comprising
(i) a fluoropolyether group-containing compound of formula (1):
Rf¹-R^{F}-O_{q}-C(=O)-NR^{Si}₂ (1)
wherein:
Rf¹ is methyl substituted with F;
R^{F} is -(OC₆F₁₂)ₐ-(OC₅F₁₀)_{b}-(OC₄F₈)_{c}-(OC₃R^{Fa}₆)_{d}-(OC₂F₄)e⁻(OCF₂)_{f}-;
wherein a, b, c, and d each independently are an integer of 0-30, e and f each independently are an integer of 1-200, with (a+b+c+d+e+f) ≥ 5 and e/f ≥ 0.9, and the order of the repeating units enclosed in parentheses provided with a subscript a, b, c, d, e, or f is not limited; and
R^{Fa} each independently is H, F or Cl;
q is 0 or 1;
R^{Si} each independently is -X¹-SiR^{a1}ₚ₁R^{b1}_{q1}R^{c1}ᵣ₁ (S1) wherein, each independently at each occurrence,
X¹ is a single bond, -O- or a divalent organic group;
R^{a1} is -Z^{1'}-SiR^{a1'}_{p1'}R^{b1'}_{q1'}R^{c1'}_{r1'} wherein, each independently at each occurrence,
Z^{1'} is a single bond, -O- or a divalent organic group;
R^{a1'} is -Z^{1"}-SiR^{a1"}_{p1"}R^{b1"}_{q1"}R^{c1"}_{r1"} wherein, each independently at each occurrence,
Z^{1"} is a single bond, -O- or a divalent organic group;
R^{a1"} is -Z^{1‴}-SiR^{b1‴}_{q1‴}R^{c1‴}_{r1‴} wherein, each independently at each occurrence,
Z^{1‴} is a single bond, -O- or a divalent organic group;
R^{b1‴} is OH or a hydrolyzable group;
R^{c1‴} is H or a monovalent organic group;
q1‴ is an integer of 0-3;
r1‴ is an integer of 0-3;
R^{b1"} is OH or a hydrolyzable group;
R^{c1"} is H or a monovalent organic group;
p1'' is an integer of 0-3;
q1'' is an integer of 0-3;
r1'' is an integer of 0-3;
R^{b1'} is OH or a hydrolyzable group;
R^{c1'} is H or a monovalent organic group;
p1' is an integer of 0-3;
q1' is an integer of 0-3;
r1' is an integer of 0-3;
R^{b1} is OH or a hydrolyzable group;
R^{c1} is H or a monovalent organic group;
p1 is an integer of 0-3;
q1 is an integer of 0-3;
r1 is an integer of 0-3;
and at least one R^{b1}, R^{b1'}, R^{b1"} or R^{b1‴} is present in each group R^{Si},
(ii) a compound of formula (2):
R^{Si}₂N-C(=O)-Rf²ₚ-R^{F}-O_{q}-C(=O)-NR^{Si}₂ (2)
wherein Rf² is C₁₋₆-alkylene optionally substituted with F; p is 0 or 1; and R^{F}, q and R^{Si} are as defined above, and
(iii) a fluorine-containing oil,
wherein the content of the compound of formula (2) is 0.001-70 mol%, and the content of the fluorine-containing oil is 0.001-50 mol%, each based on the total of the compounds of formulae (1) and (2) and the fluorine-containing oil.

2. The surface-treating agent of claim 1, wherein in formula (1) R^{F} is
- (OC₄F₈)_{c}-(OC₃F₆)_{d}-(OC₂F₄)ₑ-(OCF₂)_{f}-
wherein c and d each independently are an integer of 0-30; e and f each independently are an integer of 1-200; and the order of repeating units enclosed in parentheses provided with a subscript c, d, e, or f is not limited.

3. The surface-treating agent of claim 1 or 2, wherein in formula (1) the ratio of e/f is 0.9-2.0.

4. The surface-treating agent of any of claims 1-3, wherein in formula (1) X¹ each independently is a divalent organic group, and preferably each independently is
-(Z²¹)_{z11}-(X²)_{z12}-(Z²²)_{z13}-
wherein
Z²¹, Z²² are divalent organic groups;
X² is -O-;
z11 is 0 or 1;
z12 is 0 or 1;
z13 is 0 or 1,
and at least one of z11 and z13 is 1.

5. The surface-treating agent of any of claims 1-4, wherein in formula (1) R^{Fa} is F.

6. The surface-treating agent of any of claims 1-5, wherein in formula (1) p1 is 0 and q1 is 2 or 3.

7. The surface-treating agent of any of claims 1-6, comprising the compound of formula (2) at a molar ratio of 0.001-0.70 based on the total of the compounds of formulae (1) and (2).

8. The surface-treating agent of any of claims 1-7, further comprising one or more other components selected from a silicone oil, and a catalyst.

9. The surface-treating agent of any of claims 1-8, further comprising a solvent.

10. The use of the surface-treating agent of any of claims 1-9 as an antifouling coating agent or a water-proof coating agent, and/or for vacuum deposition.

11. A pellet comprising the surface-treating agent of any of claims 1-9.

12. An article, preferably an article which is an optical member, comprising a substrate and, on a surface of the substrate, a layer formed of the surface-treating agent of any of claims 1-9.

## Patentansprüche

1. Oberflächenbehandlungsmittel, umfassend
(i) eine fluorpolyethergruppenhaltige Verbindung der Formel (1) :
Rf¹-R^{F}-O_{q}-C(=O)-NR^{Si}₂ (1)
worin:
Rf¹ Methyl, substituiert mit F, ist;
R^{F} -(OC₆F₁₂)ₐ-(OC₃F₁₀)_{b}-(OC₄F₈)_{c}-(OC₃R^{Fa}₆)_{d}-(OC₂F₄)ₑ-(OCF₂)_{f}-ist;
worin a, b, c und d jeweils unabhängig voneinander eine ganze Zahl von 0-30 sind, e und f jeweils unabhängig voneinander eine ganze Zahl von 1-200 sind, wobei (a+b+c+d+e+f) ≥ 5 und e/f ≥ 0,9 ist, und die Reihenfolge der in Klammern gesetzten Wiederholungseinheiten, die mit einem Index a, b, c, d, e oder f versehen sind, nicht beschränkt ist; und
R^{Fa} jeweils unabhängig voneinander H, F oder Cl ist;
q 0 oder 1 ist;
R^{Si} jeweils unabhängig voneinander -X¹-SiR^{a1}ₚ₁R^{b1}_{q1}R^{c1}ᵣ₁ (S1) ist, worin jeweils unabhängig voneinander bei jedem Vorkommen
X¹ eine Einfachbindung, -O- oder eine divalente organische Gruppe ist;
R^{a1} -Z^{1'}-SiR^{a1'}_{p1'}R^{b1'}_{q1'}R^{c1'}_{r1'} ist, worin jeweils unabhängig voneinander bei jedem Vorkommen
Z^{1'} eine Einfachbindung, -O- oder eine divalente organische Gruppe ist;
R^{a1'} -Z^{1"}-SiR^{a1"}_{p1"}R^{b1"}_{q1"}R^{c1"}_{r1"} ist, worin jeweils unabhängig voneinander bei jedem Vorkommen
Z^{1"} eine Einfachbindung, -O- oder eine divalente organische Gruppe ist;
R^{a1"} -Z^{1‴}-SiR^{b1‴}_{q1‴}R^{c1‴}_{r1‴} ist, worin jeweils unabhängig voneinander bei jedem Vorkommen
Z^{1‴} eine Einfachbindung, -O- oder eine divalente organische Gruppe ist;
R^{b1‴} OH oder eine hydrolysierbare Gruppe ist;
R^{c1‴} H oder eine monovalente organische Gruppe ist;
q1^{‴} eine ganze Zahl von 0-3 ist;
r1‴ eine ganze Zahl von 0-3 ist;
R^{b1"} OH oder eine hydrolysierbare Gruppe ist;
R^{c1"} H oder eine monovalente organische Gruppe ist;
p1'' eine ganze Zahl von 0-3 ist;
q1'' eine ganze Zahl von 0-3 ist;
r1'' eine ganze Zahl von 0-3 ist;
R^{b1'} OH oder eine hydrolysierbare Gruppe ist;
R^{c1'} H oder eine monovalente organische Gruppe ist;
p1' eine ganze Zahl von 0-3 ist;
q1' eine ganze Zahl von 0-3 ist;
r1' eine ganze Zahl von 0-3 ist;
R^{b1} OH oder eine hydrolysierbare Gruppe ist;
R^{c1} H oder eine monovalente organische Gruppe ist;
p1 eine ganze Zahl von 0-3 ist;
q1 eine ganze Zahl von 0-3 ist;
r1 eine ganze Zahl von 0-3 ist;
und mindestens ein R^{b1}, R^{b1'}, R^{b1"} oder R^{b1‴} in jeder Gruppe R^{Si} vorhanden ist,
(ii) eine Verbindung der Formel (2):
R^{Si}₂N-C(=O)-Rf²ₚ-R^{F}-O_{q}-C(=O)-NR^{Si}₂ (2)
worin Rf² C₁₋₆-Alkylen, optional mit F substituiert, ist; p 0 oder 1 ist; und R^{F}, q und R^{Si} wie oben definiert sind, und
(iii) ein fluorhaltiges Öl,
wobei, jeweils bezogen auf die Gesamtmenge der Verbindungen der Formeln (1) und (2) und des fluorhaltigen Öls, der Gehalt der Verbindung der Formel (2) 0,001-70 Mol-% beträgt und der Gehalt des fluorhaltigen Öls 0,001-50 Mol-% beträgt.

2. Oberflächenbehandlungsmittel gemäß Anspruch 1, wobei in Formel (1) R^{F}
-(OC₄F₈)_{c}-(OC₃F₆)_{d}-(OC₂F₄)ₑ-(OCF₂)_{f}-
ist, worin c und d jeweils unabhängig voneinander eine ganze Zahl von 0-30 sind; e und f jeweils unabhängig voneinander eine ganze Zahl von 1-200 sind; und die Reihenfolge der in Klammern gesetzten Wiederholungseinheiten, die mit einem Index c, d, e oder f versehen sind, nicht beschränkt ist.

3. Oberflächenbehandlungsmittel gemäß Anspruch 1 oder 2, wobei in Formel (1) das Verhältnis von e/f 0,9-2,0 beträgt.

4. Oberflächenbehandlungsmittel gemäß einem der Ansprüche 1-3, wobei in Formel (1) X¹ jeweils unabhängig voneinander eine divalente organische Gruppe ist und bevorzugt jeweils unabhängig voneinander
- (Z²¹)_{z11}-(X²)_{z12}-(Z²²)_{z13}-
ist, worin
Z²¹, Z²² divalente organische Gruppen sind;
X² -O- ist;
z11 0 oder 1 ist;
z12 0 oder 1 ist;
z13 0 oder 1 ist,
und mindestens eines von z11 und z13 1 ist.

5. Oberflächenbehandlungsmittel gemäß einem der Ansprüche 1-4, wobei in Formel (1) R^{Fa} F ist.

6. Oberflächenbehandlungsmittel gemäß einem der Ansprüche 1-5, wobei in Formel (1) p1 0 ist und q1 2 oder 3 ist.

7. Oberflächenbehandlungsmittel gemäß einem der Ansprüche 1-6, umfassend die Verbindung der Formel (2) in einem Molverhältnis von 0,001-0,70, bezogen auf die Gesamtmenge der Verbindungen der Formeln (1) und (2).

8. Oberflächenbehandlungsmittel gemäß einem der Ansprüche 1-7, ferner umfassend eine oder mehrere weitere Komponenten, die aus einem Silikonöl und einem Katalysator ausgewählt sind.

9. Oberflächenbehandlungsmittel gemäß einem der Ansprüche 1-8, ferner umfassend ein Lösungsmittel.

10. Verwendung des Oberflächenbehandlungsmittels gemäß einem der Ansprüche 1-9 als Antifouling-Beschichtungsmittel oder wasserabweisendes Beschichtungsmittel und/oder für die Vakuumbeschichtung.

11. Pellet, umfassend das Oberflächenbehandlungsmittel gemäß einem der Ansprüche 1-9.

12. Gegenstand, bevorzugt ein Gegenstand, der ein optisches Element ist, umfassend ein Substrat und auf einer Oberfläche des Substrats eine Schicht, die aus dem Oberflächenbehandlungsmittel gemäß einem der Ansprüche 1-9 gebildet ist.

## Revendications

1. Agent de traitement de surface comprenant
(i) un composé contenant un groupe fluoropolyéther répondant à la formule (1) :
Rf¹-R^{F}-O_{q}-C(=O)-NR^{Si}₂ (1)
dans lequel :
Rf¹ est un groupe méthyle substitué par F ;
R^{F} est -(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}- ;
dans lequel a, b, c et d sont chacun indépendamment un nombre entier de 0 à 30, e et f sont chacun indépendamment un nombre entier de 1 à 200, avec (a + b + c + d + e + f) ≥ 5 et e/f ≥ 0,9 et l'ordre des motifs de répétition entre parenthèses dotés d'un indice a, b, c, d, e ou f n'est pas limité ; et
chaque R^{Fa} est indépendamment H, F ou C1 ;
q vaut 0 ou 1 ;
chaque R^{Si} indépendamment est -X¹-SiR^{a1}ₚ₁R^{b1}_{q1}R^{c1}ᵣ₁ (S1) dans lequel, chacun indépendamment à chaque occurrence,
X¹ est une liaison simple, -O- ou un groupe organique divalent ;
R^{a1} est -Z^{1'}-SiR^{a1'}_{p1'}R^{b1'}_{q1'}R^{c1'}_{r1'} dans lequel, chacun indépendamment à chaque occurrence,
Z¹' est une liaison simple, -O- ou un groupe organique divalent ;
R^{a1}' est -Z^{1"}-SiR^{a1"}_{p1"}R^{b1"}_{q1"}R^{c1"}_{r1"} dans lequel, chacun indépendamment à chaque occurrence,
Z^{1"} est une liaison simple, -O- ou un groupe organique divalent ;
R^{a1"} is -Z^{1‴}-SiR^{b1‴}_{q1‴}R^{c1"}_{r1‴} dans lequel, chacun indépendamment à chaque occurrence,
Z^{1"} est une liaison simple, -O- ou un groupe organique divalent ;
R^{b1"} est OH ou un groupe hydrolysable ;
R^{c1‴} est H ou un groupe organique monovalent ;
q1‴ est un nombre entier de 0 à 3 ;
r1‴ est un nombre entier de 0 à 3 ;
R^{b1}" est OH ou un groupe hydrolysable ;
R^{c1}" est H ou un groupe organique monovalent ;
p1" est un nombre entier de 0 à 3 ;
q1" est un nombre entier de 0 à 3 ;
r1" est un nombre entier de 0 à 3 ;
R^{b1'} est OH ou un groupe hydrolysable ;
R^{b1'} est OH ou un groupe organique monovalent ;
p1' est un nombre entier de 0 à 3 ;
q1' est un nombre entier de 0 à 3 ;
r1' est un nombre entier de 0 à 3 ;
R^{b1} est OH ou un groupe hydrolysable ;
R^{c1} est H ou un groupe organique monovalent ;
p1 est un nombre entier de 0 à 3 ;
q1 est un nombre entier de 0 à 3 ;
r1 est un nombre entier de 0 à 3 ;
et au moins un R^{b1}, R^{b1}', R^{b1"} ou R^{b1‴} est présent dans chaque groupe R^{Si},
(ii) un composé répondant à la formule (2) :
R^{Si}₂N-C(=0)-Rf²ₚ-R^{F}-O_{q}-C(=O)-NR^{Si}₂ (2)
dans lequel Rf² est alkylène en C₁₋₆ facultativement substitué par F ; p vaut 0 ou 1 ; et R^{F}, q et R^{Si} sont tels que définis ci-dessus, et
(iii) une huile contenant du fluor,
dans lequel la teneur en composé répondant à la formule (2) est de 0,001 à 70 % en moles et la teneur en huile contenant du fluor est de 0,001 à 50 % en moles, chacune sur la base du total des composés répondant aux formules (1) et (2) et de l'huile contenant du fluor.

2. Agent de traitement de surface selon la revendication 1, dans lequel dans la formule (1) R^{F} est
-(OC₄F₈)_{c}-(OC₃Fₑ)_{d}-(OC₂F₄)ₑ-(OCF₂)_{f}-
dans lequel c et d sont chacun indépendamment un nombre entier de 0 à 30 ; e et f sont chacun indépendamment un nombre entier de 1 à 200 ; et l'ordre des motifs de répétition entre parenthèses dotés d'un indice a, b, c, d, e ou f n'est pas limité.

3. Agent de traitement de surface selon la revendication 1 ou la revendication 2, dans lequel dans la formule (1) le rapport de e/f est de 0,9 à 2,0.

4. Agent de traitement de surface selon l'une quelconque des revendications 1 à 3, dans lequel dans la formule (1) chaque X¹ est indépendamment un groupe organique divalent et de préférence chacun est indépendamment
-(Z²¹)_{z11}-(X²)_{z12}-(Z²²)_{z13}-
dans lequel
Z²¹, Z²² sont des groupes organiques divalents ;
X² est -O- ;
z11 vaut 0 ou 1 ;
z12 vaut 0 ou 1 ;
z13 vaut 0 ou 1 ;
et au moins l'un de z11 et z13 vaut 1.

5. Agent de traitement de surface selon l'une quelconque des revendications 1 à 4, dans lequel dans la formule (1) R^{Fa} est F.

6. Agent de traitement de surface selon l'une quelconque des revendications 1 à 5, dans lequel dans la formule (1) p1 vaut 0 et q1 vaut 2 ou 3.

7. Agent de traitement de surface selon l'une quelconque des revendications 1 à 6, comprenant le composé répondant à la formule (2) dans un rapport molaire de 0,001 à 0,70 sur la base du total des composés répondant aux formules (1) et (2).

8. Agent de traitement de surface selon l'une quelconque des revendications 1 à 7, comprenant en outre un ou plusieurs composants sélectionnés à partir d'une huile de silicone et un catalyseur.

9. Agent de traitement de surface selon l'une quelconque des revendications 1 à 8, comprenant en outre un solvant.

10. Utilisation de l'agent de traitement de surface selon l'une quelconque des revendications 1 à 9 en tant qu'agent de revêtement antisalissure ou agent de revêtement imperméable et/ou destinée à un dépôt sous vide.

11. Granulé comprenant l'agent de traitement de surface selon l'une quelconque des revendications 1 à 9,

12. Article, de préférence un article qui est un élément optique, comprenant un substrat et, sur une surface du substrat, une couche formée à partir de l'agent de traitement de surface selon l'une quelconque des revendications 1 à 9.
